# EUROPÄISCHE PATENTSCHRIFT

(11) **EP 0 412 934 B1**
(45) Veröffentlichungstag und Bekanntmachung des Hinweises auf die Patenterteilung: **27.05.1998**
(21) Anmeldenummer: 90810579.4
(22) Anmeldetag: 31.07.1990
(51) Int. Cl.: C08G 75/23, C08G 81/00

(54) **Modifizierte Polyarylenethersulfone**
Modified polyarylene ether sulfones
Polyarylène éther sulfones modifiées

(30) Priorität: 09.08.1989 CH 2924/89
(43) Veröffentlichungstag der Anmeldung: 13.02.1991
(73) Patentinhaber: SUMITOMO CHEMICAL COMPANY LIMITED, Osaka-shi, Osaka 541 (JP)
(72) Erfinder: Hoffmann, Kurt, Dr., D-6147 Lautertal 2 (DE); Kainmüller, Thomas, Dr., D-6145 Lindenfels/Odenwald (DE); Pfaendner, Rudolf, Dr., D-6149 Rimbach/Odenwald 1 (DE)
(74) Vertreter: Rauh, Peter A., Dr.

(56) Entgegenhaltungen:
- FR-A- 2 547 304
- US-A- 4 275 186
- CHEMICAL ABSTRACTS, vol. 103, no. 24, 16. Dezember 1985, Columbus, Ohio, US; abstract no. 196696U, Y. DING,Y.LEI,X.WANG: 'synthesis of polysulfone-(or poly(ether sulfone)) epoxy resin block copolymers' Seite 22 ;Spalte 1

## Beschreibung

Die vorliegende Erfindung betrifft neue, modifizierte Polyethersulfone, ein Verfahren zu deren Herstellung und Lösungen enthaltend diese neuen Polymeren.

Polyarylenethersulfone sind technische Werkstoffe mit sehr guten mechanischen Eigenschaften, die jedoch in herkömmlichen organischen Lösungsmitteln nur unzureichende Lösungseigenschaften besitzen. Beispiele für solche Polyarylenethersulfone sind die im Handel erhältlichen Produkte Victrex® PES der Firma ICI und Ultrason® E der Firma BASF.

Lösungen solcher Polyarylenethersulfone sind insbesondere in chlorierten Kohlenwasserstoffen nicht stabil. Für verschiedene Anwendungen ist jedoch eine gute Lösungsstabilität des Polymeren in organischen Lösungsmitteln erwünscht. So wird beispielsweise bei der Modifizierung von duromeren Matrixharzen mit Polyarylenethern im allgemeinen mit möglichst konzentrierten Lösungen dieser Polymeren in herkömmlichen organischen Lösungsmitteln gearbeitet.

Aus der US-A-3,875,103 ist eine Beschichtungslösung für Polyethersulfone bekannt. Die Lösung erfordert ausgewählte Lösungsmittel und ein ausgewähltes Mischungsverhältnis der Komponenten.

Aus der US-A-4,275,186 sind Polyarylenether bekannt, die durch Kettenverlängerung von oligomeren, hydroxyl-terminierten Polyarylenethern mit im wesentlichen äquimolaren Mengen von difunktionellen Kupplungskomponenten, unter anderem auch Diglycidylethern, erhältlich sind. Die beschriebenen diglycidylether-modifizierten Produkte weisen eine gegenüber dem unmodifizierten Polyethersulfon deutlich herabgesetzte Glasumwandlungstemperatur auf. Eine Verringerung der Glasumwandlungstemperaturen ist im allgemeinen nicht erwünscht, da dadurch die Gebrauchstemperaturen des Polymerwerkstoffes herabgesetzt werden.

Aus der FR-A-2,547,304 sind polysiloxan-modifizierte Polyarylenethersulfone bekannt. Der Gewichtsanteil an Siloxanresten beträgt im allgemeinen mehr als 10 %, bezogen auf das Polymere. Die Siloxanreste in diesen Copolymeren bewirken im Vergleich mit den entsprechenden unmodifizierten Polyarylenethersulfonen eine erhebliche Verringerung der Glasumwandlungstemperatur.

Es wurden jetzt modifizierte Polyarylenethersulfone gefunden, die sich durch eine gute Löslichkeit in einer Reihe von Lösungsmitteln auszeichnen, mit denen sich Lösungen mit verbesserter Lagerstabilität herstellen lassen und die im Vergleich mit den entsprechenden unmodifizierten Polyarylenethersulfonen praktisch keine Verminderung der Glasumwandlungstemperatur aufweisen.

Die vorliegende Erfindung betrifft im wesentlichen lineare Polyarylenethersulfone mit einer reduzierten Viskosität von etwa 0,25 bis etwa 1,5 dl/g (gemessen an einer 1 gew. %igen Lösung in DMF bei 25 °C) bestehend im wesentlichen zu 95-99,8 Gew.% aus Segmenten der Formel I und zu 5-0,2 Gew.% aus Segmenten der Formel IIa, der Formel IIb und/oder der Formel IIC

―O⁅R⁆ , (I)

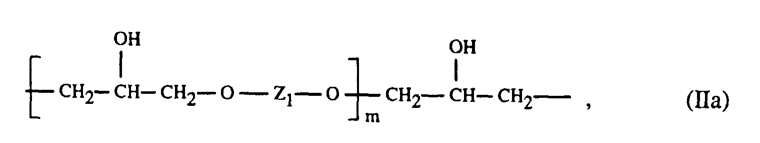

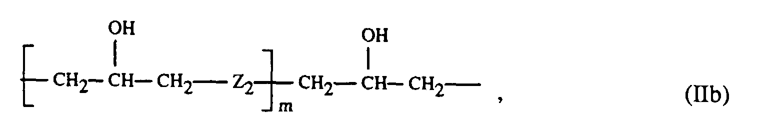

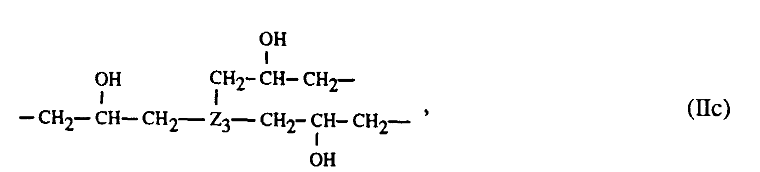

wobei die Gewichtsangaben auf das gesamte Polymere bezogen sind und wobei das Molekulargewicht (Zahlenmittel) der Segmente der Formel I 6'000 bis etwa 60'000 beträgt, wenn ausschliesslich Strukturen der Formel IIa und/oder IIb vorliegen bzw. 1000 bis etwa 60'000, wenn mehr als 0,1 Gew.% Strukturen der Formel IIC vorliegen, und R aus den wiederkehrenden Struktureinheiten der Formel Ia und/oder bis zu 99,8 Gew.%, bezogen auf das Gesamtpolymere, aus wiederkehrenden Struktureinheiten der Formel Ib besteht 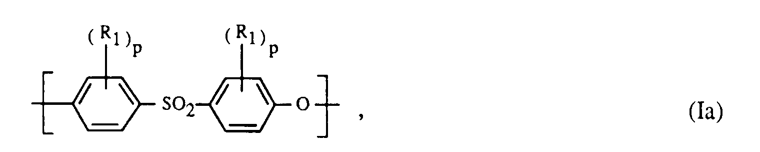 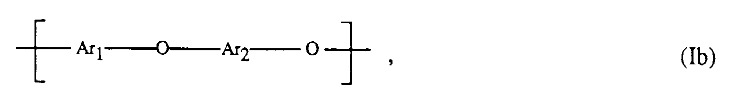 worin R₁ C₁-C₆-Alkyl, C₃-C₁₀-Alkenyl, Phenyl oder Halogen bedeutet, p eine ganze Zahl von 0 bis 4 ist, Ar₁ ein zweiwertiger carbocyclisch-aromatischer Rest und Ar₂ ein Rest der Formeln IIIc, IIId oder IIIe ist 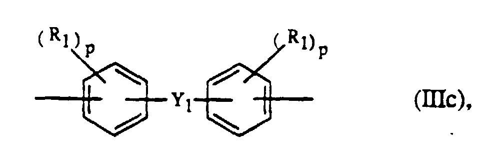 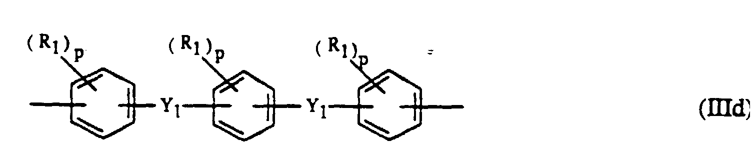 oder 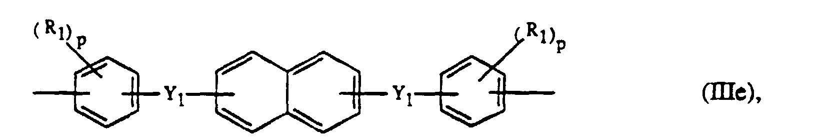 worin Y₁ -SO₂- ist, Z₁ ein zweiwertiger Rest einer cycloaliphatischen, aromatischen oder araliphatischen Dihydroxyverbindung nach dem Entfernen der beiden Hydroxylgruppen ist, Z₂ ein zweiwertiger Rest einer cycloaliphatischen, aromatischen oder araliphatischen di-sekundären Aminoverbindung nach dem Entfernen der beiden N-Wasserstoffatome ist und m eine ganze Zahl von 1 bis etwa 10 bedeutet und Z₃ einen dreiwertigen Rest einer cycloaliphatischen, aromatischen oder araliphatischen Verbindung mit Hydroxy- und/oder Aminogruppen nach dem Entfernen der Hydroxy- und/oder Aminowasserstoffatome darstellt, wobei besagte Reste Ar₁, Ar₂, Z₁, Z₂ und Z₃ gegebenenfalls mit ein bis vier C₁-C₆-Alkylgruppen, C₃-C₁₀-Alkenylgruppen, Phenylgruppen oder Halogenatomen substituiert sein können und wobei in besagten Resten Z₁, Z₂ und Z₃ gegebenenfalls ein, zwei, drei oder vier Ringkohlenstoffatome durch Sauerstoff-, Schwefel- und/oder Stickstoffatome ersetzt sein können.

Die reduzierte Viskosität der erfindungsgemässen Polymeren erstreckt sich über einen Bereich von etwa 0,25 bis etwa 1,5 dl/g. Dies entspricht einem Molekulargewichtsbereich von etwa 10'000 bis etwa 120'000 (Zahlenmittel). Bevorzugt werden Polymere mit einem Zahlenmittel des Molekulargewichts von 15'000 bis 60'000.

Der Begriff "im wesentlichen linear" ist so zu verstehen, dass die erfindungsgemässen Polymeren entweder lineare Ketten ausbilden oder einen solchen Verzweigungsgrad aufweisen, so dass sie sich ohne Schwierigkeit in einem herkömmlichen organischen Lösungsmittel, beispielsweise in einem chlorierten Kohlenwasserstoff, lösen lassen.

Bedeuten irgendwelche Reste C₁-C₆-Alkyl, so handelt es sich dabei um verzweigte oder insbesondere um geradkettige Reste. Bevorzugt werden geradkettige Alkylreste mit ein bis drei Kohlenstoffatomen, insbesondere Methyl.

Beispiele für Alkylreste sind Methyl, Ethyl, n-Propyl, Isopropyl, n-Butyl, sek.Butyl, n-Pentyl und n-Hexyl.

Bedeuten irgendwelche Reste C₃-C₁₀-Alkenyl, so handelt es sich dabei um verzweigte oder insbesondere um geradkettige Reste.

Beispiele für Alkenylreste sind Propenyl, Allyl oder Methallyl.

Bedeuten irgendwelche Reste Halogen, so handelt es sich dabei im allgemeinen um Fluor, Iod oder insbesondere um Chlor oder um Brom.

Bedeuten irgendwelche Reste zweiwertige carbocyclisch-aromatische Reste oder zweiwertige Reste einer aromatischen di-sekundären Aminoverbindung nach dem Entfernen der beiden N-Wasserstoffatome oder dreiwertige Reste einer aromatischen Verbindung mit Hydroxy- und/oder Aminogruppen nach dem Entfernen der Hydroxy- und/oder Aminowasserstoffatome, so handelt es sich dabei in der Regel um aromatische Kohlenwasserstoffreste mit sechs bis vierzehn Ringkohlenstoffatomen, die gegebenenfalls mit den oben angegebenen Resten substituiert sind. Mehrkernige aromatische Reste können als kondensierte Systeme vorliegen oder mehrere aromatische Systeme, wie Phenylenreste, sind über eine direkte Bindung oder über Brückenglieder, wie eine -O-, -S-, -SO-, -SO₂-, -CO-, -CH₂-, -C(CH₃)₂- oder -C(CF₃)₂- Gruppe, miteinander verknüpft.

Beispiele für solche aromatische Kohlenwasserstoffreste sind Phenylen, Naphthylen, Biphenylen und zwei, drei oder vier über Brückenglieder miteinander verknüpfte Phenylenreste.

Die aromatischen Kohlenwasserstoffreste sind in der Regel unsubstituiert. Sie können aber ihrerseits auch ein bis vier Substituenten tragen, wie C₁-C₆-Alkylgruppen, Halogenatome oder bevorzugt C₃-C₁₀-Alkenylgruppen.

Ist Z₁ ein zweiwertiger Rest einer cycloaliphatischen Dihydroxyverbindung nach dem Entfernen der beiden Hydroxylgruppen oder Z₂ ein zweiwertiger Rest einer cycloaliphatischen di-sekundären Aminoverbindung nach dem Entfernen der beiden N-Wasserstoffatome oder Z₃ ein dreiwertiger cycloaliphatischer Rest einer Verbindung mit Hydroxy- und/oder Aminogruppen nach dem Entfernen der Hydroxy- und/oder Aminowasserstoffatome, so handelt es sich dabei in der Regel um Cycloalkylengruppen mit fünf oder sechs Ringkohlenstoffatomen, die gegebenenfalls mit den oben angegebenen Resten substituiert sind und/oder die gegebenenfalls Teil einer Alkylenkette sein können.

Beispiele für Cycloalkylenreste sind Cyclopentylen, Cyclohexylen, Methylcyclohexylen, 1 ,4-Bis-methylen-cyclohexan und 4,4'-Methylen-bis-(cyclohex-1-yl).

Ein Beispiel für einen araliphatischen Rest ist der Xylylenrest.

In den cyclischen Resten Z₁, Z₂ und/oder Z₃ können auch ein bis vier Ringkohlenstoffatome durch Sauerstoff-, Schwefel- und/oder Stickstoffatome ersetzt sein. Dabei kann es sich um aromatische oder nicht aromatische heterocyclische Systeme handeln, die vorzugsweise fünf- oder sechsgliedrig sind. Vorzugsweise sind ein bis drei Ringkohlenstoffatome durch Stickstoffatome oder ein oder zwei Ringkohlenstoffatome durch Sauerstoff- oder Schwefelatome ersetzt. Es können auch unterschiedliche Heteroatome in einem Ring auftreten, beispielsweise ein Stickstoff- und ein Sauerstoffatom.

Insbesondere bei Z₂ kann es sich bei den Heteroatomen um in das Ringsystem eingebundene sekundäre Aminogruppen handeln. Beispiele dafür werden weiter unten aufgeführt.

Der Index p ist vorzugsweise 0.

Ar₁ ist vorzugsweise ein Rest der Formeln IIIa bis IIIe 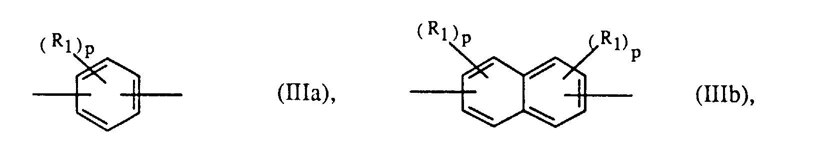 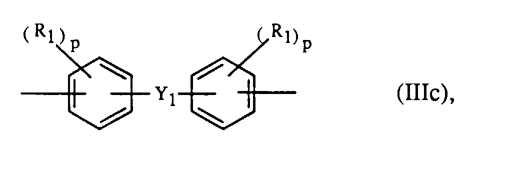 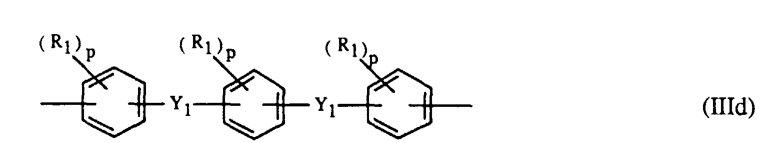 oder 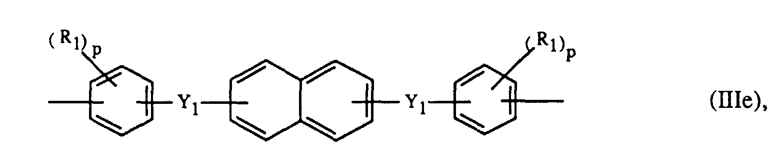 worin R₁ und p die oben definierte Bedeutung besitzen und Y₁ eine direkte Bindung, -SO₂-,-CO-, -S-,-SO-, -CH₂-, -C(CH₃)₂-, -C(C₆H₅)₂-, -C(CH₃)(C₆H₅)- oder -C(CF₃)₂- ist.
Z₁ ist vorzugsweise ein Rest der Formeln IVa bis IVg 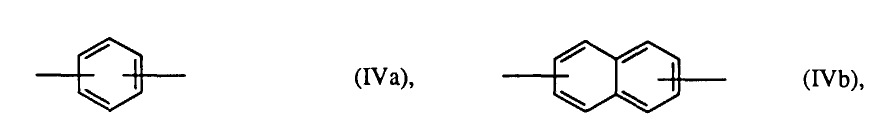 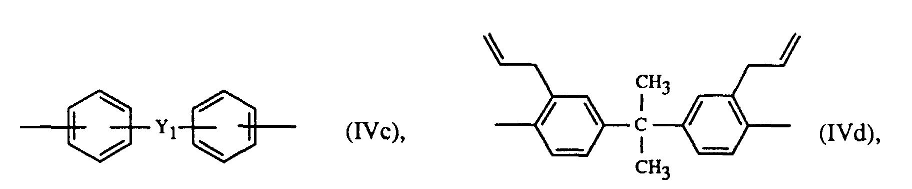 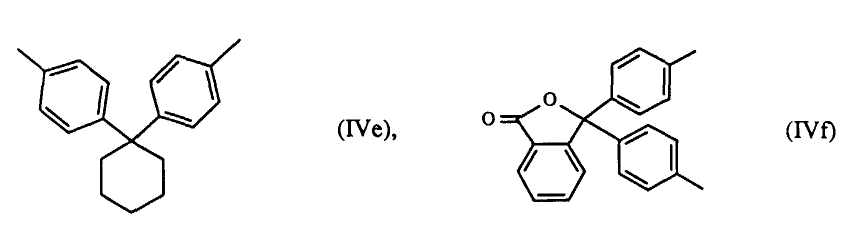 oder 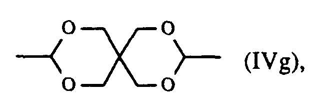 worin Y₁ eine direkte Bindung, -SO₂-, -CO-, -S-, -SO-, -CH₂-, -C(CH₃)₂-, -C(C₆H₅)₂-, -C(CH₃)(C₆H₅)- oder -C(CF₃)₂- ist.

Besonders bevorzugt ist Z₁ ein Rest der Formel 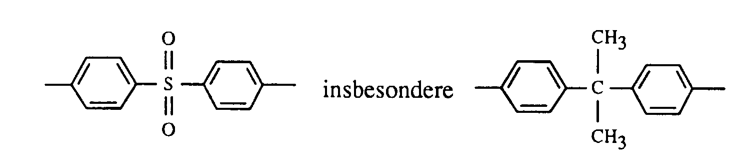 und

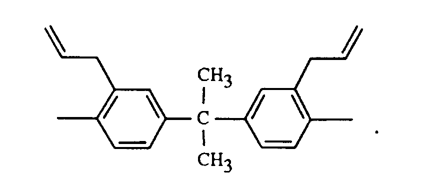

Der Index m ist vorzugsweise eine ganze Zahl von 1 bis 3.
Z₂ ist vorzugsweise ein Rest der Formeln Va bis Vj

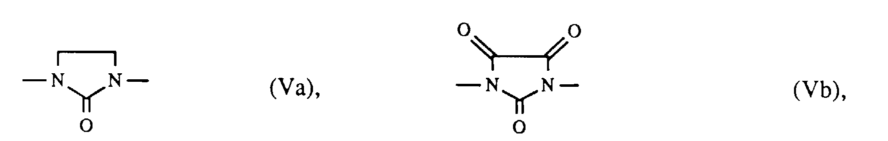

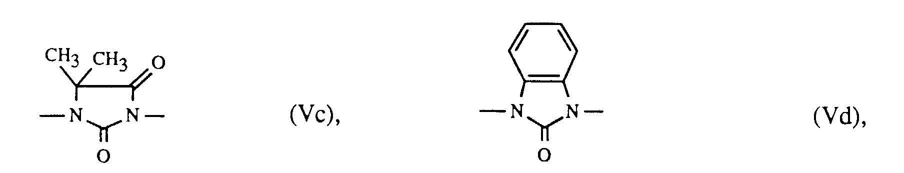

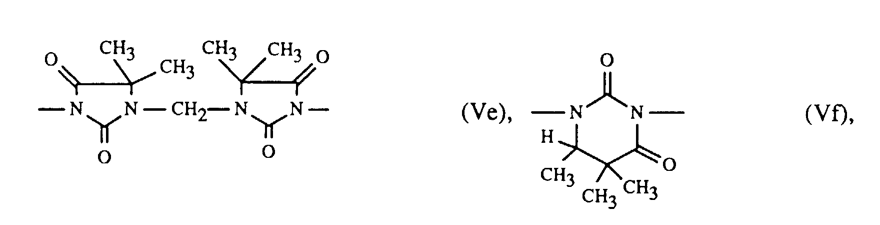

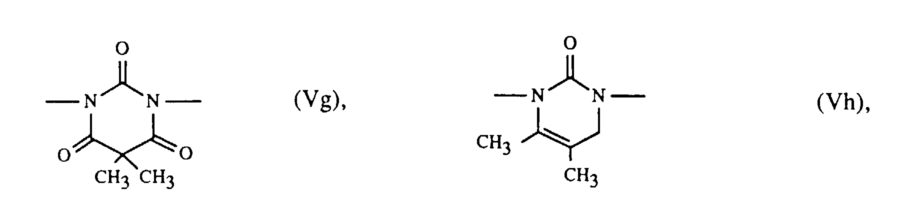

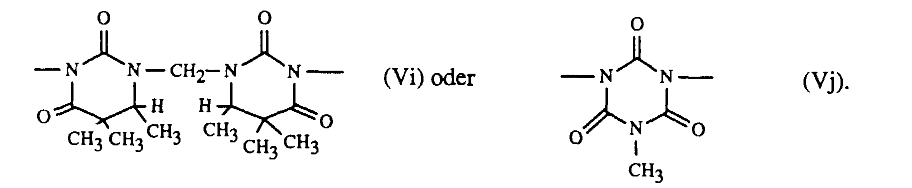

Besonders bevorzugte Polyarylenethersulfone der vorliegenden Erfindung besitzen die Reste Ar₁ der Formeln 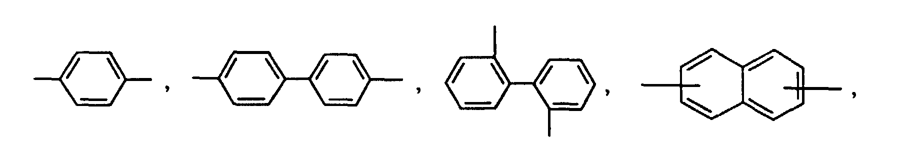 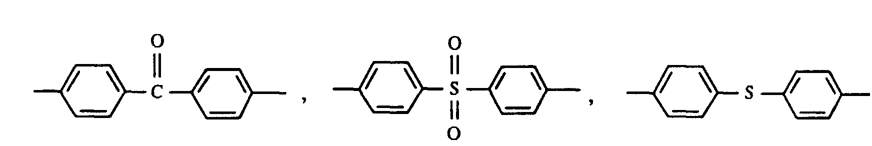 und

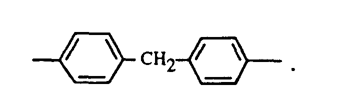

Besonders bevorzugte Polyarylenethersulfone der vorliegenden Erfindung besitzen die Reste Ar₂ der Formel

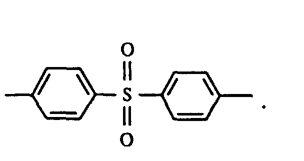

Besonders bevorzugte Polyarylenethersulfone der vorliegenden Erfindung besitzen die Reste Z₁ der Formeln

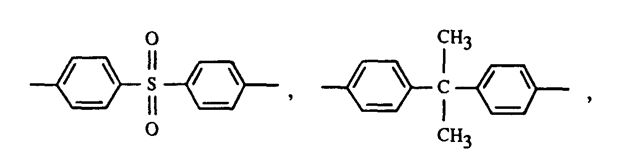

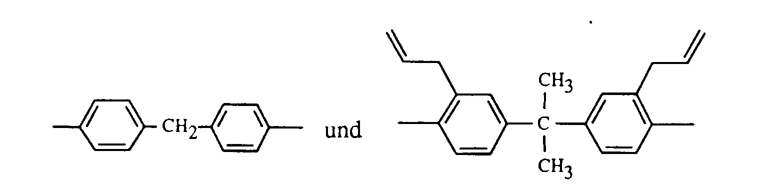

Besonders bevorzugte Polyarylenethersulfone der vorliegenden Erfindung besitzen die Reste Z₃ der Formeln 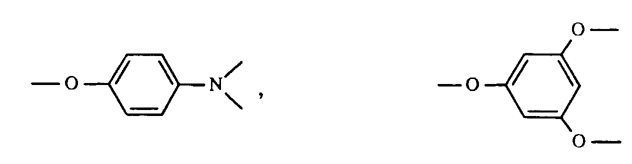 und

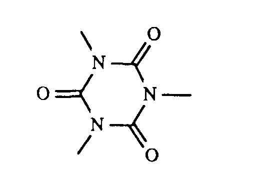

Ganz besonders bevorzugte Polyethersulfone der vorliegenden Erfindung sind dadurch gekennzeichnet, dass das Molekulargewicht (Zahlenmittel) der Segmente der Formel I 8'000 bis 20'000 beträgt, wenn ausschliesslich Strukturen der Formel IIa und/oder IIb vorliegen bzw. 2000 bis etwa 20'000, wenn mehr als 0,1 Gew.% Strukturen der Formel II vorliegen.

Von diesen Typen sind besonders die Polyethersulfone bevorzugt, bei denen das Molekulargewicht (Zahlenmittel) der Segmente der Formel I 8'000 bis 20'000, bzw. 2'000 bis 20'000 beträgt, und bei denen Ar₁ ausgewählt wird aus der Gruppe bestehend aus 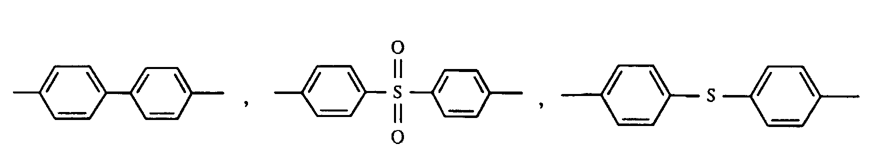 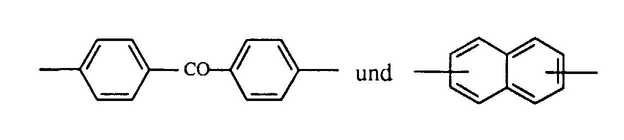 und bei denen Ar₂ ein Rest der Formel 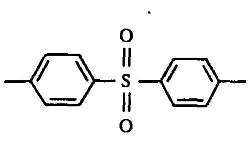 ist.

Besonders bevorzugt bestehen die erfindungsgemässen Polyarylenethersulfone zu 95-99,8 Gew.% aus Segmenten der Formel I, worin R ein wiederkehrendes Strukturelement der Formel Ia ist, und zu 0,2-5 Gew.% aus Segmenten der Formel IIa, worin m 1 oder 2 ist und wobei die Gewichtsangaben auf das gesamte Polymere bezogen sind.

Ganz besonders bevorzugt beträgt der Anteil der Segmente der Formel IIa, IIb und/oder IIc in den erfindungsgemässen Polymeren 0,2-2 Gew.%, bezogen auf das Gesamtpolymere.

Die erfindungsgemäss modifizierten Polymeren weisen in der Regel überwiegend phenolische Endgruppen auf. Weitere spezifische Endgruppen können durch Folgereaktionen hergestellt werden. Beispielsweise können Alkoxy- bzw. Acyloxyendgruppen durch Reaktion eines hydroxy-terminierten erfindungsgemässen Polymeren mit einem Alkylhalogenid bzw. mit einem Monocarbonsäurehalogenid erhalten werden. Die erfindungsgemässen Polymeren sind im allgemeinen amorph oder teilkristallin.

Die erfindungsgemässen modifizierten Polyarylenethersulfone lassen sich herstellen, indem man 95-99,8 Gew.% hydroxyl-terminierte Polyarylenethersulfon-Präpolymere der Formel VI

HO―R―H (VI),

worin R die oben definierte Bedeutung besitzt, mit 5-0,2 Gew.% einer Glycidylverbindung der Formel VIIa, der Formel VIIb und/oder der Formel VIIc umsetzt, wobei die Gewichtsangaben auf die Gesamtmischung bezogen sind 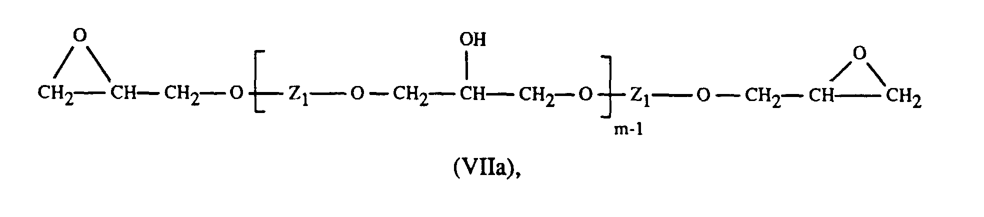 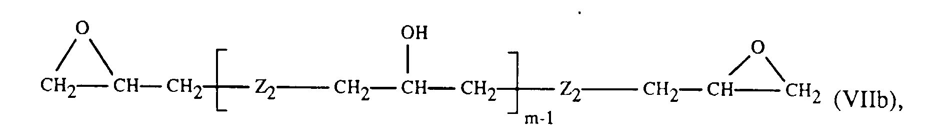 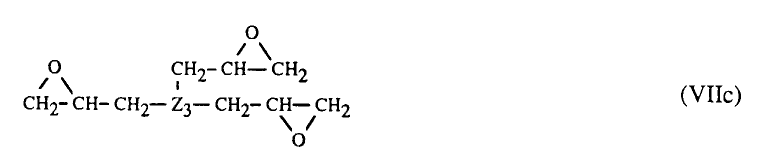 und worin Z₁, Z₂, Z₃ und m die oben definierte Bedeutung besitzen.

Die als Ausgangsverbindungen eingesetzten Polyarylenethersulfon-Präpolymeren der Formel VI besitzen ein Molekulargewicht (Zahlenmittel) von 6'000 bis etwa 60'000 (bei Präpolymeren mit Strukturen der Formel IIa und/oder IIb) bzw. 1'000 bis 60'000 (bei Präpolymeren mit Strukturen der Formel IIc).

Diese Präpolymeren lassen sich in an sich bekannter Weise durch Umsetzung von Bisphenol der Formel VIa und gegebenenfalls einem oder mehreren zusätzlichen Bisphenolen der Formel VIb und einem aromatischen Dihalogensulfon der Formel VIIIa und gegebenenfalls einem oder mehreren zusätzlichen aktivierten Dihalogenverbindungen VIIIb erhalten

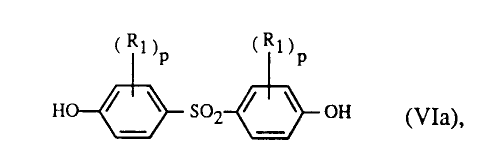

HO―Ar―OH (VIb)

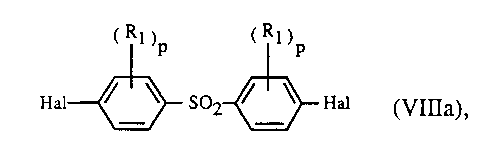

Hal―Ar―Hal (VIIIb),

worin R₁ und p die oben definierte Bedeutung besitzen, Hal ein Halogenatom, insbesondere Chlor oder Fluor, ist und Ar eine der oben für Ar₁ oder Ar₂ definierten Bedeutungen besitzt, wobei Ar im Falle der Formel VIIIb eine nukleophil aktivierende Gruppe, wie -SO₂-, -CO- oder oder -SO- in ortho- oder para-Stellung zur Abgangsgruppe Hal aufweist.

Die Bisphenolkomponente wird dabei im allgemeinen im Ueberschuss vorgelegt, so dass hydroxyl-terminierte Derivate entstehen. Die Mengenverhältnisse werden in an sich bekannter Weise so gewählt, so dass Präpolymere mit dem gewünschten Molekulargewicht erhalten werden.

Man kann allerdings auch die aromatische Dihalogenverbindung im Ueberschuss vorlegen und das entstandene dihalogen-terminierte Präpolymere durch Behandlung mit einer Base, beispielsweise mit Natrium- oder Kaliumhydroxid, in das entsprechende hydroxyl-terminierte Präpolymere überführen.

Selbstverständlich lassen sich zur Herstellung der Präpolymeren auch Monomere einsetzen, die je ein Halogenatom und eine Hydroxylgruppe pro Molekül aufweisen.

Die Herstellung des Präpolymeren erfolgt in der Regel in Lösung. Dazu wählt man im allgemeinen ein Lösungsmittel aus, das beide, die Ausgangsstoffe und das entstehende Präpolymere, zumindest teilweise löst. Beispiele dafür sind polare aprotische Lösungsmittel, wie Dimethylsulfoxid, N-Methylpyrrolidon, N,N-Dimethylacetamid, N,N'-Dimethylpropylenharnstoff, N-Cyclohexylpyrrolidon, N-Alkyl-Caprolactame oder bevorzugt Diphenylsulfon.

Die Umsetzung erfolgt vorzugsweise in Gegenwart einer Base, um den entstehenden Halogenwasserstoff zu neutralisieren. Beispielsweise werden NaOH oder KOH und vorzugsweise Na₂CO₃, K₂CO₃ oder Gemische von Alkali- bzw. Erdalkalimetallcarbonaten eingesetzt.

Die zur Modifizierung der Präpolymeren eingesetzten Diglycidylether der Formel VIIa oder N,N'-Diglycidylverbindungen der Formel VIIb oder Triglycidylverbindungen der Formel VIIc sind an sich bekannt und teilweise im Handel erhältlich.

Beispiele für besonders bevorzugte Verbindungen der Formel VIIa sind die Diglycidylether auf Basis von Bisphenol F, Dihydroxydiphenylsulfon, Diallyl-Bisphenol A und insbesondere auf Basis von Bisphenol A.

Die Modifizierung der Präpolymeren kann in Lösung eines hochsiedenden inerten Lösungsmittels vorgenommen werden. Das Lösungsmittel wird so gewählt, dass beide, die Ausgangskomponenten und das Umsetzungsprodukt, darin zumindest teilweise gelöst werden. Als hochsiedendes Lösungsmittel lässt sich beispielsweise Diphenylsulfon einsetzen. Im allgemeinen legt man das Präpolymere im gegebenenfalls aufgeschmolzenen Lösungsmittel vor und gibt anschliessend die Glycidylverbindung zu, die gegebenenfalls in einem inerten Lösungsmittel gelöst ist Die Modifizierung kann in Anwesenheit oder in Abwesenheit weiterer Zusätze oder Katalysatoren durch Umsetzung von Phenol- oder Phenolatgruppen mit Epoxidgruppen erfolgen. Vorzugsweise werden die bei der Herstellung des Präpolymeren erhaltenen Reaktionsgemische gegebenenfalls nach Verdünnen mit inertem Lösungsmittel direkt für die Modifizierungsreaktion eingesetzt. Geeignete Katalysatoren für die Modifizierungsreaktion sind zum Beispiel Basen, wie sie auch zur Herstellung des Präpolymeren eingesetzt werden. Die Reaktionstemperatur wird so gewählt, dass eine ausreichende Umsetzungsgeschwindigkeit gewährleistet ist. Typische Reaktionstemperaturen liegen zwischen 100 und 200 °C.

Vorzugsweise setzt man Komponente VI mit Komponente(n) VIIa, VIIb und/oder VIIc in einem Molverhältnis von etwa zwischen 1,1: 1 bis 10: 1 um.

Die thermoplastischen erfindungsgemässen Polyarylenethersulfone können in der für Thermoplaste üblichen Weise eingesetzt werden und z.B. zu Formkörpern oder Folien verarbeitet werden, oder als Matrixharze, Klebstoffe oder Ueberzugsmittel verwendet werden.

Vor der Verarbeitung der beispielsweise als Presspulver, Schmelze oder insbesondere als Lösung vorliegenden Polymeren können übliche Zusatzstoffe, wie beispielsweise Füllstoffe, Pigmente, Stabilisatoren oder Verstärkungsmittel, wie Kohlenstoff-, Bor-, Metall- oder Glasfasern, zugegeben werden. Die erfindungsgemässen Polymeren können auch zusammen mit anderen Thermoplasten oder Duromeren verarbeitet werden.

Vorzugsweise eignen sich die erfindungsgemässen Polyarylenethersulfone als Matrixharze für die Herstellung von Faserverbundsystemen, wobei man als Verstärkungsfasem die üblichen bei der Verstärkung technischer Werkstoffe verwendeten Fasern einsetzen kann. Diese können organische oder anorganische Fasern, Naturfasern oder Synthesefasern sein, und als Faserbündel, als orientierte oder nicht-orientierte Fasern oder als Endlosfasern vorliegen.

Eine weitere bevorzugte Anwendungsmöglichkeit für die erfindungsgemässen Polyarylenethersulfone besteht in der Modifizierung anderer Kunststoffe. Diese können grundsätzlich Thermoplaste oder Duromere sein. Besondere Bedeutung erlangen solche Systeme als Matrixharze, welche zur Herstellung von Verbundbauteilen zum Einsatz gelangen.

Besonders hervorzuheben ist die unerwartet hohe Löslichkeit der erfindungsgemässen Polymeren in einer Reihe von herkömmlichen organischen Lösungsmitteln, wie in fluorierten oder chlorierten Kohlenwasserstoffen, und die sehr gute Stabilität dieser Lösungen. Beispiele für geeignete Lösungsmittel sind polare aprotische Lösungsmittel, wie N-Methylpyrrolidon, N,N-Dimethylacetamid, N,N-Dimethylformamid, Dimethylsulfoxid und Sulfolan, sowie chlorierte aliphatische Kohlenwasserstoffe, wie z.B. Methylenchlorid, 1,2-Dichlorethan und cyclische Ketone, wie z.B. Cyclohexanon und Cyclopentanon.

Die Erfindung betrifft daher auch eine Lösung enthaltend etwa 1 bis 75 Gew.%, vorzugsweise 5 bis 50 Gew.%, bezogen auf die Lösung, eines erfindungsgemässen Polyarylenethersulfons gelöst in einem organischen Lösungsmittel.

Des weiteren betrifft die Erfindung die Verwendung der erfindungsgemässen Polyarylenethersulfone oder deren Lösungen zur Herstellung von Formstoffen, Beschichtungen, Folien oder Faserverbunden.

Die folgenden Beispiele erläutern die Erfindung.

### I. Herstellung von niedermolekularem Polyethersulfon

Beispiel A: 626 g (2,5 mol) 4,4'-Dihydroxydiphenylsulfon, 703 g (2,45 mol) 4,4'-Dichlordiphenylsulfon, 363 g (2,625 mol) K₂CO₃ und 1400 g Diphenylsulfon werden in einen 10 l-Metallreaktor unter N₂-Spülung auf 180 °C erhitzt. Nach Erreichen von 180 °C Innentemperatur wird das Rohstoffgemisch 2 h gerührt. Das bei der Reaktion gebildete Kondensationswasser destilliert über einen absteigenden Kühler fortlaufend aus dem Reaktionsgemisch ab. Nach 2 h bei 180 °C wird die Reaktionstemperatur innerhalb von weiteren 2 h stufenweise auf 260 °C erhöht. Nach Erreichen von 260 °C wird die Temperatur 4 h konstant beibehalten. Das Reaktionsgemisch wird danach über ein Bodenventil dem Reaktionskessel entnommen und nach Abkühlen grob gemahlen. Das gemahlene Reaktionsgemisch wird für die nachfolgende Synthesestufe eingesetzt.

Ein Teil des so hergestellten Polymeren wird durch Extraktion (3 x Aceton/Wasser = 80/20; 1 x Wasser) aufgearbeitet. Zum Freisetzen der OH-Endgruppen wird bei der Wasserextraktion konz. Essigsäure zugesetzt. Das Polyethersulfon wird anschliessend bei 110 °C im Vakuum getrocknet. Es weist eine reduzierte Viskosität von η_{red} = 0,33 dl/g (1 % Polymeres in DMF bei 25 °C) und einen aromatischen OH-Endgruppengehalt von 110 µVal/g auf.

Beispiel B: 626 g (2,5 mol) 4,4'-Dihydroxydiphenylsulfon, 707 g (2,46 mol) 4,4'-Dichlordiphenylsulfon, 363 g (2,63 mol) K₂CO₃ und 1400 g Diphenylsulfon werden analog Beispiel A in einem 10 l-Metallreaktor umgesetzt und anschliessend aufgearbeitet. Das Polymere weist eine red. Viskosität von η_{red} = 0,42 dl/g (1 % Polymeres in DMF bei 25 °C) und einen aromatischen OH-Endgruppengehalt von 70 µVal/g auf.

Beispiel C: 70,07 g (0,28 mol) 4,4'-Dihydroxydiphenylsulfon, 15,27 g (0,07 mol) 4,4'-Di-hydroxydiphenylsulfid, 99,0 g (0,0345 mol) 4,4'-Dichlordiphenylsulfon, 50,79 g (0,3675 mol) K₂CO₃ und 184,34 g Diphenylsulfon werden analog Beispiel A in einem 1 l-Metallreaktor umgesetzt (Reaktionsbedingungen: 180 °C/2 h; 180-260 °C/2 h; 260 °C/4 h). Das resultierende Polymere weist eine red. Viskosität von η_{red} = 0,22 dl/g (1 % Polymeres in DMF bei 25 °C) auf.

Beispiel D: 70,08 g (0,28 mol) 4,4'-Dihydroxydiphenylsulfon, 13,03 g (0,07 mol) 4,4'-Dihydroxybiphenyl, 99,0 8g (0,0345 mol) 4,4'-Dichlordiphenylsulfon, 50,79 g (0,3675 mol) K₂CO₃ und 182,19 g Diphenylsulfon werden analog Beispiel A in einem 1 l-Metallreaktor umgesetzt (Reaktionsbedingungen: 180 °C/2 h; 180-260 °C/2 h; 260 °C/4,25 h). Das resultierende Polymere weist eine red. Viskosität von η_{red} = 0,19 dl/g (1 % Polymeres in DMF bei 25 °C) auf.

Beispiel E: 80,1 g (0,50 mol) 2,7-Dihydroxynaphthalin, 140,7 g (0,49 mol) 4,4'-Dichlordiphenylsulfon, 72,6 g (0,525 mol) K₂CO₃ und 220,8 g Diphenylsulfon werden analog Beispiel A in einem 1 l-Metallreaktor umgesetzt (Reaktionsbedingungen: 180 °C/2 h; 180-260 °C/2 h; 260 °C/2 h). Das resultierende Polymere weist eine red. Viskosität von η_{red} = 0,20 dl/g (1 % Polymeres in DMF bei 25 °C) auf.

Beispiel F: 80,1 g (0,50 mol) 1,6-Dihydroxynaphthalin, 140,7 g (0,49 mol) 4,4'-Dichlordiphenylsulfon, 72,6 g (0,525 mol) K₂CO₃ und 220,8 g Diphenylsulfon werden analog Beispiel A in einem 1 l-Metallreaktor umgesetzt (Reaktionsbedingungen: 180 °C/2 h; 180-260 °C/2 h; 260 °C/2 h). Das resultierende Polymere weist eine red. Viskosität von η_{red} = 0,21 dl/g (1 % Polymeres in DMF bei 25 °C) auf.

Beispiel G: 93,1 g (0,50 mol) 4,4-Dihydroxybiphenyl, 140,7 g (0,49 mol) 4,4'-Dichlordiphenylsulfon, 72,6 g (0,525 mol) K₂CO₃ und 223,8 g Diphenylsulfon werden analog Beispiel A in einem 1 l-Metallreaktor umgesetzt (Reaktionsbedingungen: 180 °C/2 h; 180-260 °C/2 h; 260 °C/4 h). Das resultierende Polymere weist eine red. Viskosität von η_{red} = 0,22 dl/g (1 % Polymeres in DMF bei 25 °C) auf.

Beispiel H: 105 g (0,50 mol) 4,4'-Dihydroxybenzophenon, 140,7 g (0,49 mol) 4,4'-Dichlordiphenylsulfon, 72,6 g (0,525 mol) K₂CO₃ und 245,6 g Diphenylsulfon werden analog Beispiel A in einem 1 l-Metallreaktor umgesetzt (Reaktionsbedingungen: 180 °C/2 h; 180-260 °C/2 h; 260 °C/3,75 h). Das resultierende Polymere weist eine red. Viskosität von η_{red} = 0,30 dl/g (1 % Polymeres in DMF bei 25 °C) auf.

### II. Herstellung eines modifizierten Polyethersulfons

Beispiel 1: 2500 g des in Beispiel A hergestellten Reaktionsgemisches, das 1250 g (0,068 mol) niedermolekulares Polyethersulfon enthält, werden mit 625 g Diphenylsulfon versetzt und in einem 10 l-Metallreaktor unter N₂ bei 150 °C/2 h vollständig aufgeschmolzen. Anschliessend werden 16,52 g (0,048 mol) Bisphenol-A-diglycidylether (BPADG, Epoxidäquivalent: 175,5-179 g/Val; 1,33 Gew.% bezogen auf Polyethersulfon) zur Schmelze zugetropft. Die Reaktion wird 2h nach der vollständigen Zugabe des Diglycidylethers beendet.

Das Reaktionsgemisch wird aus dem Reaktionskessel in Strangform ausgetragen und direkt granuliert. Vor der weiteren Aufarbeitung wird das Reaktionsgemisch vorgemahlen. Das gemahlene Reaktionsgemisch wird dann durch Extraktion (3 x Aceton/Wasser = 80/20; 1 x Wasser) aufgearbeitet. Zum Freisetzen der OH-Endgruppen wird bei der Wasserextraktion konz. Essigsäure zugesetzt. Das so erzielte modifizierte Polyethersulfon wird anschliessend bei 110 °C im Vakuum getrocknet. Es weist eine red. Viskosität von η_{red} = 0,56 dl/g auf.

Beispiele 2-4: Man verfährt wie unter Beispiel 1 beschrieben. Art und Mengen der Ausgangsprodukte sowie die Eigenschaften des modifizierten Polyethersulfons sind in Tabelle 1 aufgelistet.

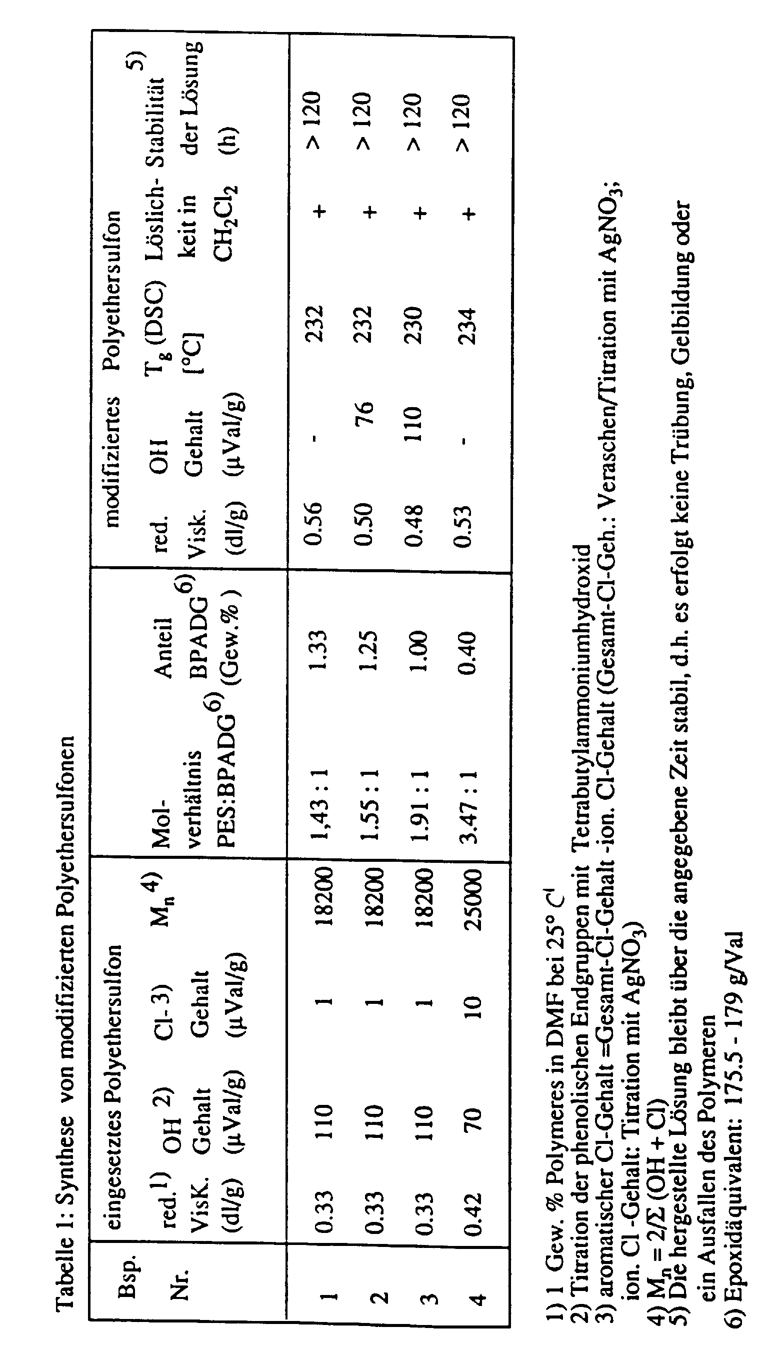

Beispiel 5: 300 g eines nach Beispiel A hergestellten Reaktionsgemisches, das 120,4 g niedermolekulares Polyethersulfon enthält, werden mit 1,81 g (0,0042 mol) Diallylbisphenol-A-diglycidylether (Epoxidäquivalent 217,9 g/Val, 1,50 Gew.-% bezogen auf das Polyethersulfon) in einem 1 l-Metallreaktor umgesetzt. Man verfährt dabei wie in Beispiel 1 beschrieben. Die Eigenschaften des so erhaltenen Polyethersulfons sind in Tabelle 2 zusammengefasst.

Beispiel 6: 300 g eines nach Beispiel A hergestellten Reaktionsgemisches, das 120,4 g niedermolekulares Polyethersulfon enthält, werden mit 2,59 g (0,006 mol) Diallylbisphenol-A-diglycidylether (Epoxidäquivalent 217,9 g/Val, 2,15 Gew.-% bezogen auf das Polyethersulfon) in einem 1 l-Metallreaktor umgesetzt. Man verfährt dabei wie in Beispiel 1 beschrieben. Die Eigenschaften des so erhaltenen Polyethersulfons sind in Tabelle 2 zusammengefasst.

Beispiel 7: 49,83 g eines nach Beispiel A hergestellten Reaktionsgemisches, das 20,0 g niedermolekulares Polyethersulfon enthält, werden mit 0,20 g Bisphenol-S-diglycidylether (1,0 Gew.-% bezogen auf das Polyethersulfon) in einem 1 l-Metallreaktor umgesetzt. Man verfährt dabei wie in Beispiel 1 beschrieben. Die Eigenschaften des so erhaltenen Polyethersulfons sind in Tabelle 2 zusammengefasst.

Beispiel 8: 49,83 g eines nach Beispiel A hergestellten Reaktionsgemisches, das 20,0 g niedermolekulares Polyethersulfon enthält, werden mit 0,26 g Bisphenol-S-diglycidylether (1,3 Gew.-% bezogen auf das Polyethersulfon) in einem 1 l-Metallreaktor umgesetzt. Man verfährt dabei wie in Beispiel 1 beschrieben. Die Eigenschaften des so erhaltenen Polyethersulfons sind in Tabelle 2 zusammengefasst.

Beispiel 9: 45,0 g eines nach Beispiel C hergestellten Reaktionsgemisches, das 19,78 g niedermolekulares Polyethersulfon enthält, werden mit 0,339 g (0,00097 mol) Bisphenol-A-diglycidylether (1,97 Gew.-% bezogen auf das Polyethersulfon) in einem 1 l-Metallreaktor umgesetzt. Man verfährt dabei wie in Beispiel 1 beschrieben. Die Eigenschaften des so erhaltenen Polyethersulfons sind in Tabelle 2 zusammengefasst.

Beispiel 10: 45,0 g eines nach Beispiel D hergestellten Reaktionsgemisches, das 19,78 g niedermolekulares Polyethersulfon enthält, werden mit 0,45 g (0,00128 mol) Bisphenol-A-diglycidylether (2,3 Gew.-% bezogen auf das Polyethersulfon) in einem 1 l-Metallreaktor umgesetzt. Man verfährt dabei wie in Beispiel 1 beschrieben. Die Eigenschaften des so erhaltenen Polyethersulfons sind in Tabelle 2 zusammengefasst.

Beispiel 11: 45,0 g eines nach Beispiel E hergestellten Reaktionsgemisches, das 17,2 g niedermolekulares Polyethersulfon enthält, werden mit 6 g Diphenylsulfon versetzt und in einem Glasgefäss unter N₂ bei 150 °C vollständig aufgeschmolzen. Anschliessend werden 0,26 g (0,75 mmol) Bisphenol-A-diglycidylether (1,50 Gew.-% bezogen auf das Polyethersulfon) zur Schmelze zugetropft. Das Reaktionsgemisch wird danach 2 h bei dieser Temperatur gerührt.

Die Mischung wird aus dem Reaktionskessel ausgetragen und nach dem Abkühlen grob gemahlen. Das gemahlene Reaktionsgemisch wird dann durch Extraktion (3x Aceton/Wasser = 80/20, 1 x Wasser) aufgearbeitet. Zum Freisetzen der OH-Endgruppen wird bei der Wasserextraktion Essigsäure zugesetzt. Das so erhaltene modifizierte Polyethersulfon wird anschliessend bei 110 °C im Vakuum getrocknet. Die Eigenschaften des Polyethersulfons sind in Tabelle 2 zusammengefasst.

Beispiel 12: 30,0 g eines nach Beispiel F hergestellten Reaktionsgemisches, das 11,5 g niedermolekulares Polyethersulfon enthält, werden mit 0,27 g (0,75 mmol) Bisphenol-A-diglycidylether (2,35 Gew.-% bezogen auf das Polyethersulfon) in analoger Weise wie in Beispiel 11 umgesetzt. Die Eigenschaften des so erhaltenen Polyethersulfons sind in Tabelle 2 zusammengefasst.

Beispiel 13: 45,0 g eines nach Beispiel G hergestellten Reaktionsgemisches, das 17,66 g niedermolekulares Polyethersulfon enthält, werden mit 0,39 g (1,13 mmol) Bisphenol-A-diglycidylether (2,20 Gew.-% bezogen auf das Polyethersulfon) in analoger Weise wie in Beispiel 11 umgesetzt. Die Eigenschaften des so erhaltenen Polyethersulfons sind in Tabelle 2 zusammengefasst.

Beispiel 14: 45,0 g eines nach Beispiel H hergestellten Reaktionsgemisches, das 17,85 g niedermolekulares Polyethersulfon enthält, werden mit 0,36 g (1,13 mmol) Bisphenol-A-diglycidylether (2,0 Gew.-% bezogen auf das Polyethersulfon) in analoger Weise wie in Beispiel 11 umgesetzt. Die Eigenschaften des so erhaltenen Polyethersulfons sind in Tabelle 2 zusammengefasst.

Beispiel 15: 35,0 g eines nach Beispiel A hergestellten Reaktionsgemisches, das 14,07 g niedermolekulares Polyethersulfon enthält, werden mit 0,06 g (0,17 mmol) N,N,O-Triglycidyl-p-aminophenol (0,43 Gew.-% bezogen auf das Polyethersulfon) in einem 1 l Metallreaktor analog Beispiel 11 umgesetzt. Die Eigenschaften des so erhaltenen Polyethersulfons sind in Tabelle 2 zusammengefasst.

Beispiel 16: 450 g eines nach Beispiel A hergestellten Reaktionsgemisches, das 180,6 g niedermolekulares Polyethersulfon enthält, werden mit 1,35 g (4,8 mmol) N,N,O-Triglycidyl-p-aminophenol (0,75 Gew.-% bezogen auf das Polyethersulfon) in einem 1 1 Metallreaktor analog Beispiel 11 umgesetzt. Die Eigenschaften des so erhaltenen Polyethersulfons sind in Tabelle 2 zusammengefasst.

Beispiel 17: 35,0 g eines nach Beispiel A hergestellten Reaktionsgemisches, das 14,07 g niedermolekulares Polyethersulfon enthält, werden mit 0,116 g (0,40 mmol) N,N,O-Triglycidyl-p-aminophenol (0,82 Gew.-% bezogen auf das Polyethersulfon) in einem Glasgefäss analog Beispiel 11 umgesetzt. Die Eigenschaften des so erhaltenen Polyethersulfons sind in Tabelle 2 zusammengefasst.

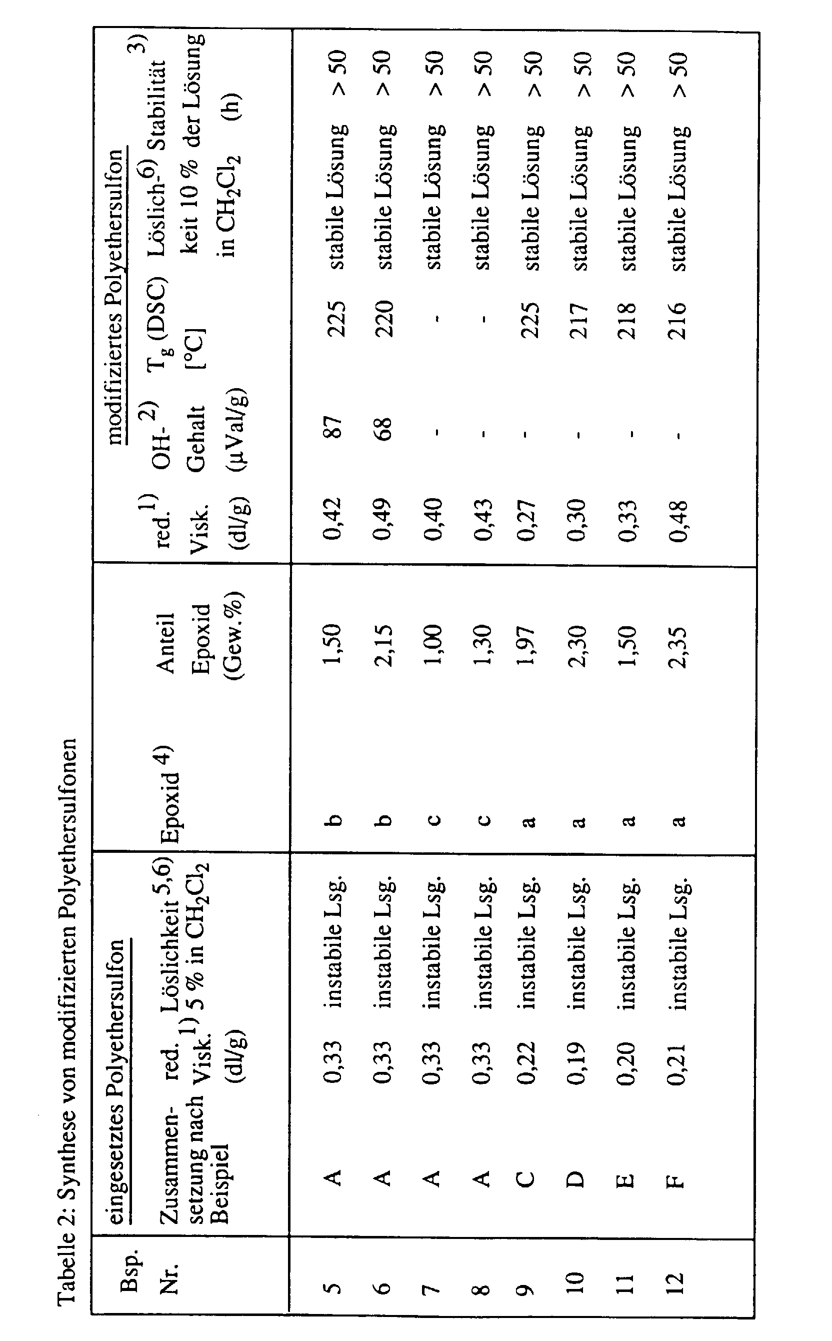

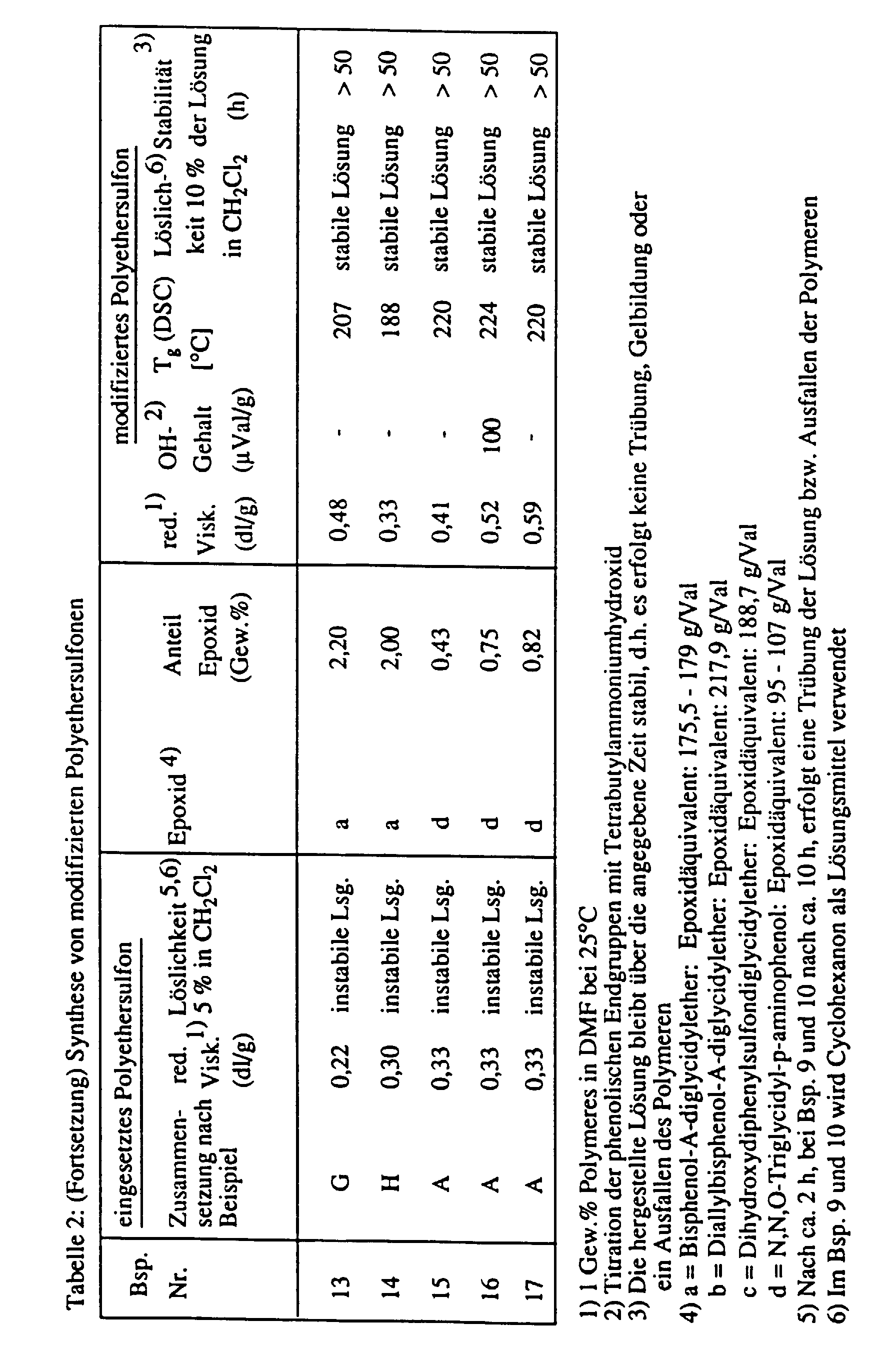

## Patentansprüche (Patentansprüche für folgende(n) Vertragsstaat(en): DE, FR, GB, IT, NL, SE)

1. Im wesentlichen lineare Polyarylenethersulfone mit einer reduzierten Viskosität von etwa 0,25 bis etwa 1,5 dl/g (gemessen an einer 1 gew. %igen Lösung in DMF bei 25 °C) bestehend im wesentlichen zu 95-99,8 Gew.% aus Segmenten der Formel I und zu 5-0,2 Gew.% aus Segmenten der Formel IIa, der Formel IIb und/oder der Formel IIc
―O⁅R⁆ , (I) 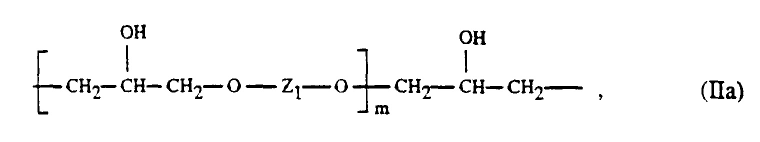 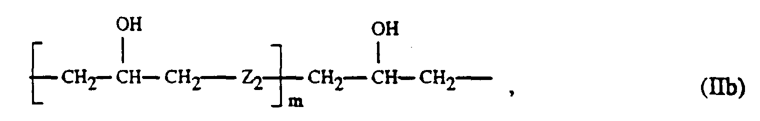 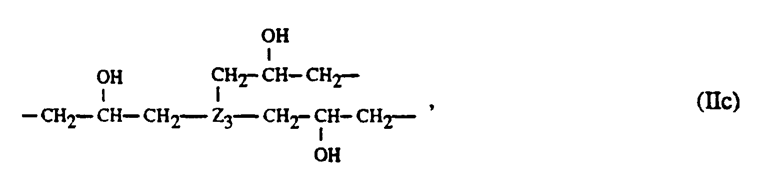
wobei die Gewichtsangaben auf das gesamte Polymere bezogen sind und wobei das Molekulargewicht (Zahlenmittel) der Segmente der Formel I 6'000 bis etwa 60'000 beträgt, wenn ausschliesslich Strukturen der Formel IIa und/oder IIb vorliegen bzw. 1000 bis etwa 60'000, wenn mehr als 0,1 Gew.% Strukturen der Formel IIc vorliegen, und R aus den wiederkehrenden Struktureinheiten der Formel Ia und/oder bis zu 99,8 Gew.%, bezogen auf das Gesamtpolymere, aus wiederkehrenden Struktureinheiten der Formel Ib besteht 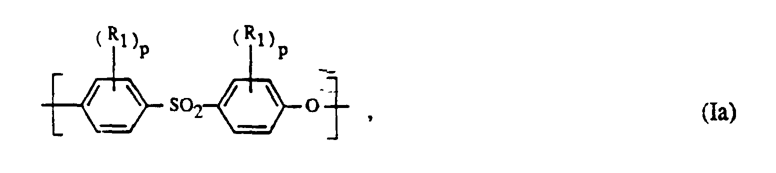 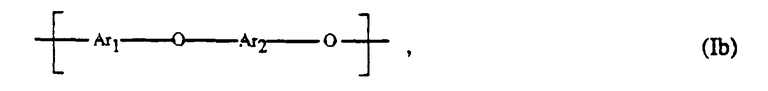 worin R₁ C₁-C₆-Alkyl, C₃-C₁₀-Alkenyl, Phenyl oder Halogen bedeutet, p eine ganze Zahl von 0 bis 4 ist, Ar₁ ein zweiwertiger carbocyclisch-aromatischer Rest und Ar₂ ein Rest der Formeln IIIc, IIId oder IIIe ist 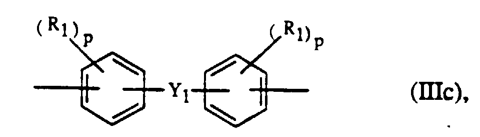 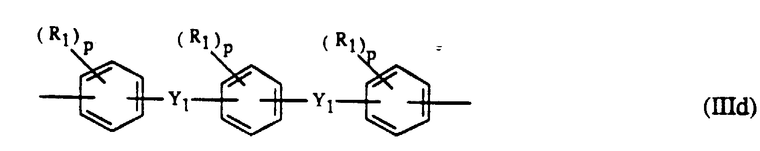 oder 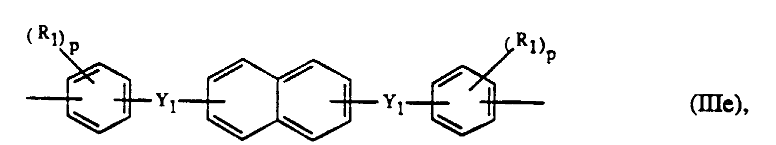 worin Y₁ -SO₂- ist, Z₁ ein zweiwertiger Rest einer cycloaliphatischen, aromatischen oder araliphatischen Dihydroxyverbindung nach dem Entfernen der beiden Hydroxylgruppen ist, Z₂ ein zweiwertiger Rest einer cycloaliphatischen, aromatischen oder araliphatischen di-sekundären Aminoverbindung nach dem Entfernen der beiden N-Wasserstoffatome ist und m eine ganze Zahl von 1 bis etwa 10 bedeutet und Z₃ einen dreiwertigen Rest einer cycloaliphatischen, aromatischen oder araliphatischen Verbindung mit Hydroxy- und/oder Aminogruppen nach dem Entfernen der Hydroxy- und/oder Aminowasserstoffatome darstellt, wobei besagte Reste Ar₁, Ar₂, Z₁, Z₂ und Z₃ gegebenenfalls mit ein bis vier C₁-C₆-Alkylgruppen, C₃-C₁₀-Alkenylgruppen, Phenylgruppen oder Halogenatomen substituiert sein können und wobei in besagten Resten Z₁, Z₂ und Z₃ gegebenenfalls ein, zwei, drei oder vier Ringkohlenstoffatome durch Sauerstoff-, Schwefel- und/oder Stickstoffatome ersetzt sein können.

2. Polyethersulfone gemäss Anspruch 1, dadurch gekennzeichnet, dass Ar₁ ein Rest der Formeln IIIa bis IIIe ist 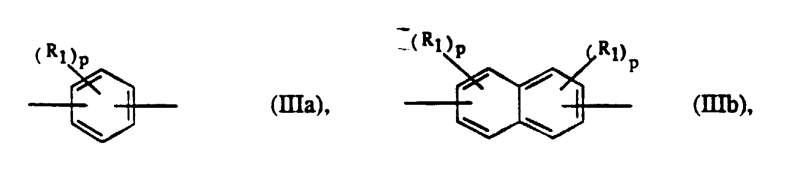 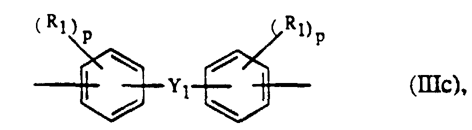 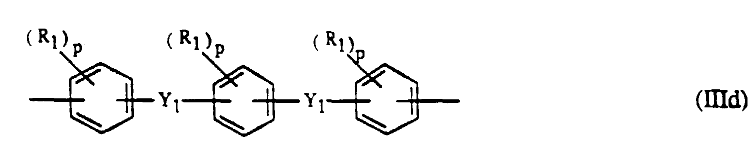 oder 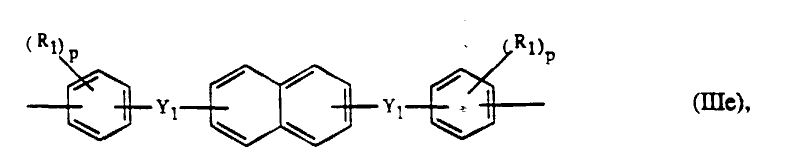 worin R₁ und p die oben definierte Bedeutung besitzen und Y₁ eine direkte Bindung, -SO₂-, -CO-, -S-, -SO-, -CH₂-, -C(CH₃)₂-, -C(C₆H₅)₂-, -C(CH₃)(C₆H₅)- oder -C(CF₃)₂- ist.

3. Polyethersulfone gemäss Anspruch 1, dadurch gekennzeichnet, dass Z₁ ein Rest der Formeln IVa bis IVg ist 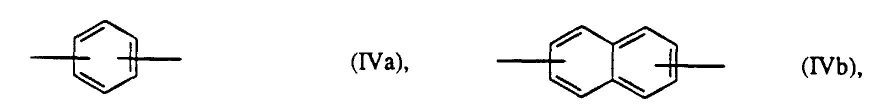 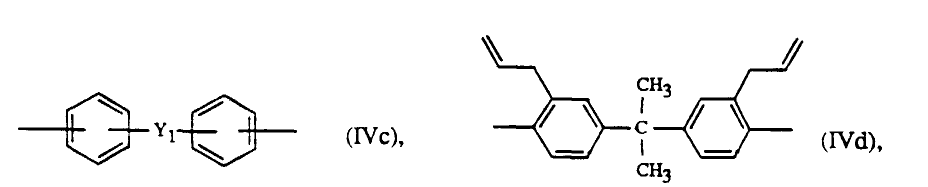 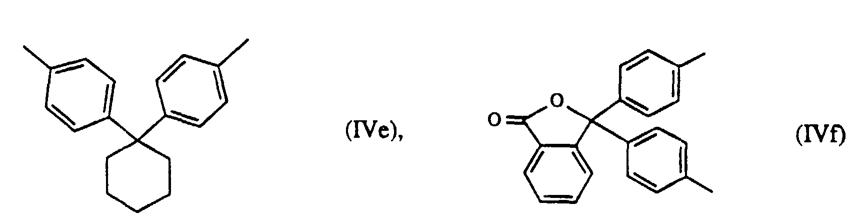 oder 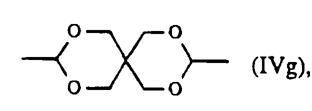 worin Y₁ die in Anspruch 2 definierte Bedeutung besitzt.

4. Polyethersulfone gemäss Anspruch 1, dadurch gekennzeichnet, dass Z₂ ein Rest der Formeln Va bis Vj ist

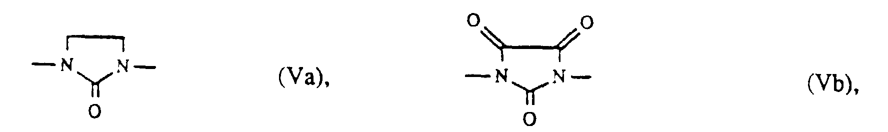

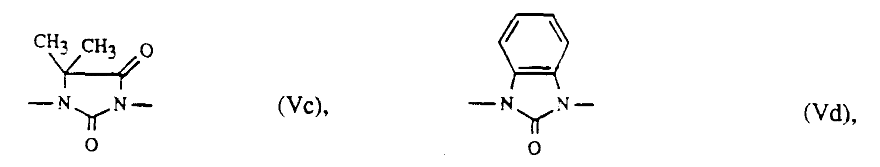

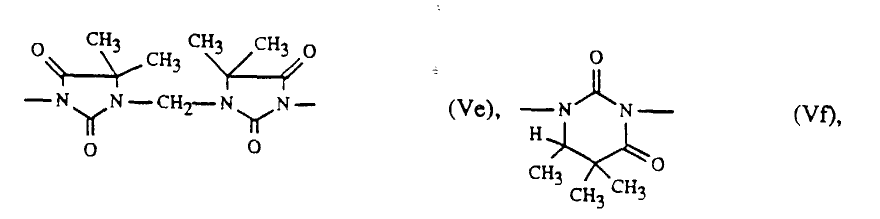

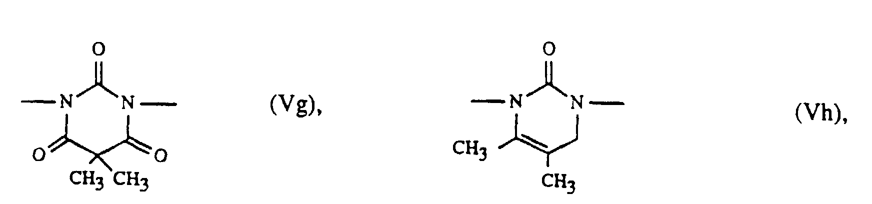

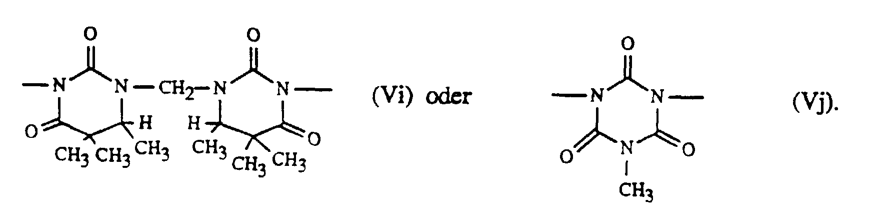

5. Polyethersulfone gemäss Anspruch 2, dadurch gekennzeichnet, dass Ar₁ ausgewählt wird aus der Gruppe bestehend aus

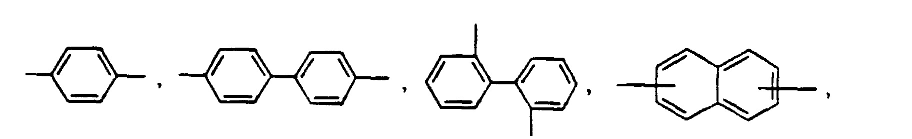

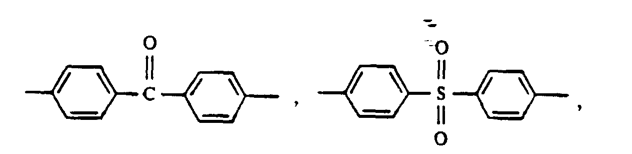

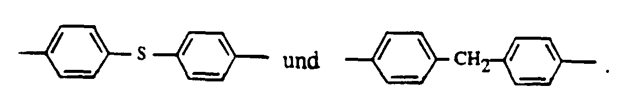

6. Polyethersulfone gemäss Anspruch 1, dadurch gekennzeichnet, dass Ar₂ 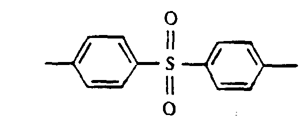 ist.

7. Polyethersulfone gemäss Anspruch 3, dadurch gekennzeichnet, dass Z₁ ausgewählt wird aus der Gruppe bestehend aus

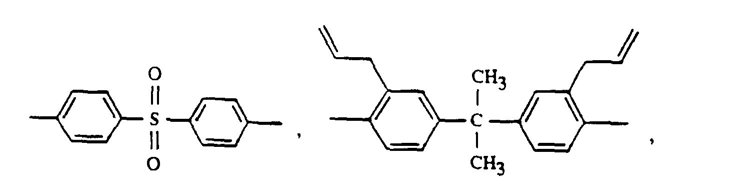

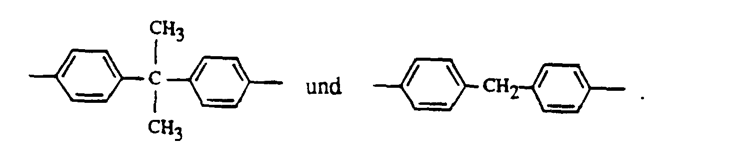

8. Polyethersulfone gemäss Anspruch 1, dadurch gekennzeichnet, dass Z₃ ausgewählt wird aus der Gruppe bestehend aus 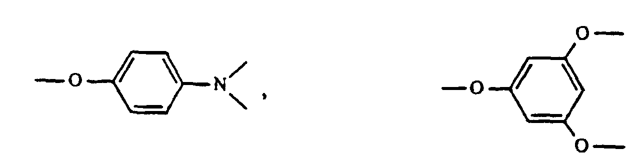 und

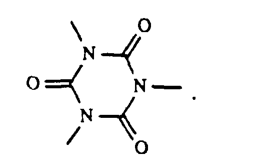

9. Polyethersulfone gemäss Anspruch 1, dadurch gekennzeichnet, dass das Molekulargewicht (Zahlenmittel) der Segmente der Formel I 8'000 bis 20'000 beträgt, wenn ausschliesslich Strukturen der Formel IIa und/oder IIb vorliegen bzw. 2000 bis etwa 20'000, wenn mehr als 0,1 Gew.% Strukturen der Formel IIc vorliegen.

10. Polyethersulfone gemäss Anspruch 1, dadurch gekennzeichnet, dass das Molekulargewicht (Zahlenmittel) der Segmente der Formel I 8'000 bis 20'000 beträgt, wenn ausschliesslich Strukturen der Formel IIa und/oder IIb vorliegen bzw. 2000 bis etwa 20'000, wenn mehr als 0,1 Gew.% Strukturen der Formel IIc vorliegen, dass Ar₁ ausgewählt wird aus der Gruppe bestehend aus 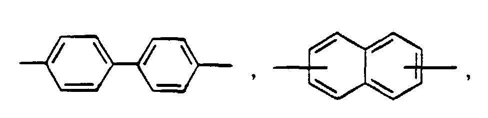 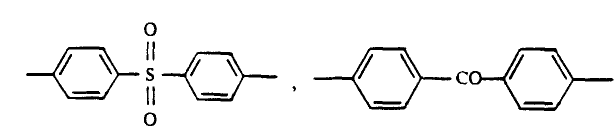 und 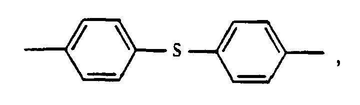 und dass Ar₂ ein Rest der Formel 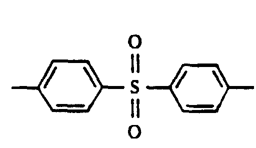 ist.

11. Polyethersulfone gemäss Anspruch 1, dadurch gekennzeichnet, dass Z₁ ausgewählt wird aus der Gruppe bestehend aus 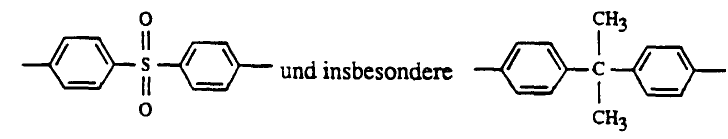 und 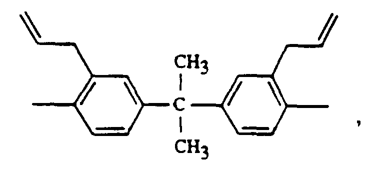 und dass m eine ganze Zahl von 1 bis 3 ist.

12. Polyethersulfone gemäss Anspruch 1, dadurch gekennzeichnet, dass diese zu 95-99,8 Gew.% aus Segmenten der Formel I, worin R ein wiederkehrendes Strukturelement der Formel Ia ist, und zu 0,2-5 Gew.% aus Segmenten der Formel IIa bestehen, worin m 1 oder 2 ist und wobei die Gewichtsangaben auf das gesamte Polymere bezogen sind.

13. Polyethersulfone gemäss Anspruch 1, dadurch gekennzeichnet, dass der Anteil der Segmente der Formel IIa, IIb und/oder IIc 0,2-2 Gew.%, bezogen auf das Gesamtpolymere beträgt.

14. Verfahren zur Herstellung der Polyethersulfone gemäss Anspruch 1, dadurch gekennzeichnet, dass man 95-99,8 Gew.% hydroxyl-terminierte Polyarylenethersulfon-Präpolymere der Formel VI
HO―R―H , (VI)
worin R die in Anspruch 1 definierte Bedeutung besitzt, mit 5-0,2 Gew.% einer Glycidylverbindung der Formel VIIa, der Formel VIIb und/oder der Formel VIIc umsetzt, wobei die Gewichtsangaben auf die Gesamtmischung bezogen sind 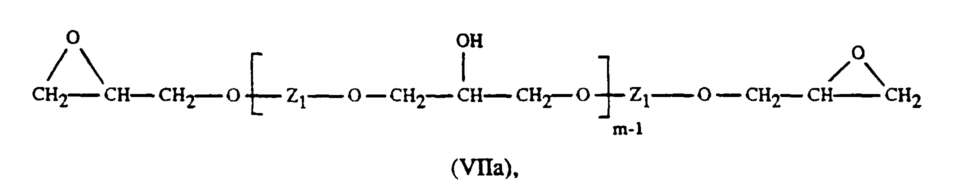 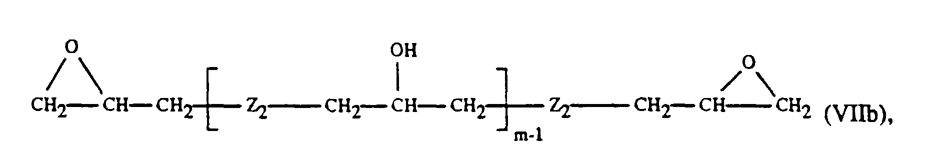 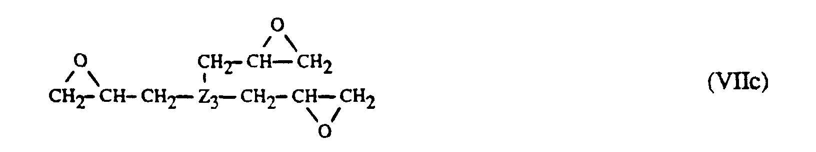 und worin Z₁, Z₂, Z₃ und m die in Anspruch 1 definierte Bedeutung besitzen.

15. Lösung enthaltend etwa 1 bis 75 Gew.%, bezogen auf die Lösung, eines Polyarylenethersulfons gemäss Anspruch 1 gelöst in einem organischen Lösungsmittel.

## Patentansprüche (Patentansprüche für folgende(n) Vertragsstaat(en): ES)

1. Verfahren zur Herstellung von im wesentlichen linearen Polyarylenethersulfonen mit einer reduzierten Viskosität von etwa 0,25 bis etwa 1,5 dl/g (gemessen an einer 1 gew. %igen Lösung in DMF bei 25 °C) bestehend im wesentlichen zu 95-99,8 Gew.% aus Segmenten der Formel I und zu 5-0,2 Gew.% aus Segmenten der Formel IIa, der Formel IIb und/oder der Formel IIc
―O⁅R⁆ , (I) 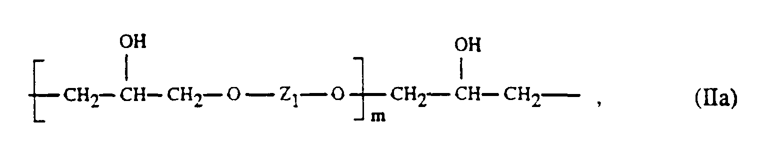 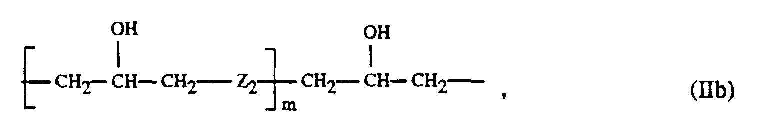 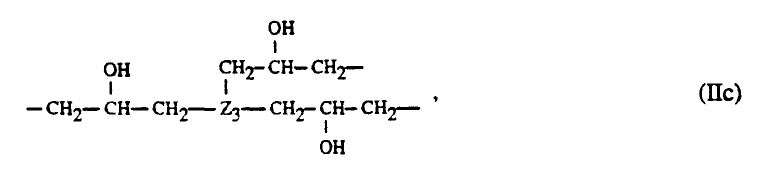
wobei die Gewichtsangaben auf das gesamte Polymere bezogen sind und wobei das Molekulargewicht (Zahlenmittel) der Segmente der Formel I 6'000 bis etwa 60'000 beträgt, wenn ausschliesslich Strukturen der Formel IIa und/oder IIb vorliegen bzw. 1000 bis etwa 60'000, wenn mehr als 0,1 Gew.% Strukturen der Formel IIc vorliegen, und R aus den wiederkehrenden Struktureinheiten der Formel Ia und/oder bis zu 99,8 Gew.%, bezogen auf das Gesamtpolymere, aus wiederkehrenden Struktureinheiten der Formel Ib besteht 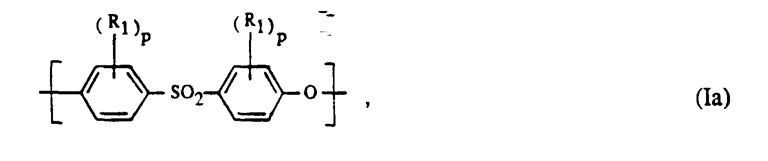 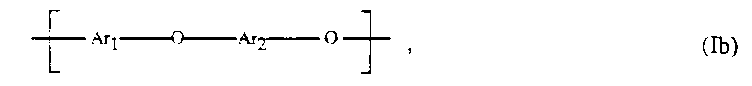 worin R₁ C₁-C₆-Alkyl, C₃-C₁₀-Alkenyl, Phenyl oder Halogen bedeutet, p eine ganze Zahl von 0 bis 4 ist, Ar₁ ein zweiwertiger carbocyclisch-aromatischer Rest und Ar₂ ein Rest der Formeln IIIc, IIId oder IIIe ist 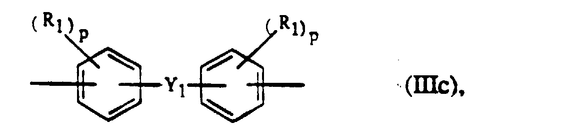 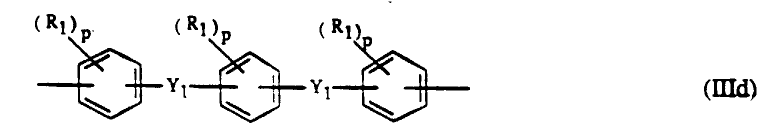 oder 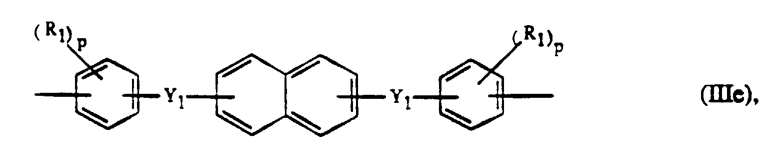 worin Y₁ -SO₂- ist, Z₁ ein zweiwertiger Rest einer cycloaliphatischen, aromatischen oder araliphatischen Dihydroxyverbindung nach dem Entfernen der beiden Hydroxylgruppen ist, Z₂ ein zweiwertiger Rest einer cycloaliphatischen, aromatischen oder araliphatischen di-sekundären Aminoverbindung nach dem Entfernen der beiden N-Wasserstoffatome ist und m eine ganze Zahl von 1 bis etwa 10 bedeutet und Z₃ einen dreiwertigen Rest einer cycloaliphatischen, aromatischen oder araliphatischen Verbindung mit Hydroxy- und/oder Aminogruppen nach dem Entfernen der Hydroxy- und/oder Aminowasserstoffatome darstellt, wobei besagte Reste Ar₁, Ar₂, Z₁, Z₂ und Z₃ gegebenenfalls mit ein bis vier C₁-C₆-Alkylgruppen, C₃-C₁₀-Alkenylgruppen, Phenylgruppen oder Halogenatomen substituiert sein können und wobei in besagten Resten Z₁, Z₂ und Z₃ gegebenenfalls ein, zwei, drei oder vier Ringkohlenstoffatome durch Sauerstoff-, Schwefel- und/oder Stickstoffatome ersetzt sein können, dadurch gekennzeichnet, dass man 95-99,8 Gew.% hydroxyl-terminierte Polyarylenethersulfon-Präpolymere der Formel VI
HO―R―H , (VI)
worin R die oben definierte Bedeutung besitzt, mit 5-0,2 Gew.% einer Glycidylverbindung der Formel VIIa, der Formel VIIb und/oder der Formel VIIc umsetzt, wobei die Gewichtsangaben auf die Gesamtmischung bezogen sind 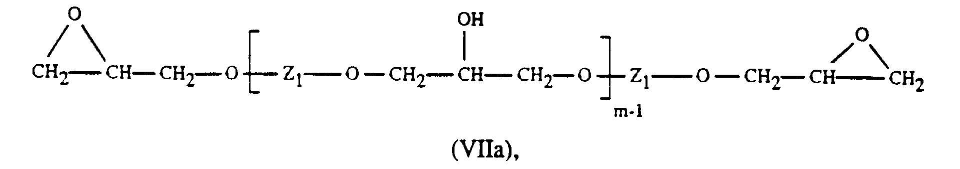 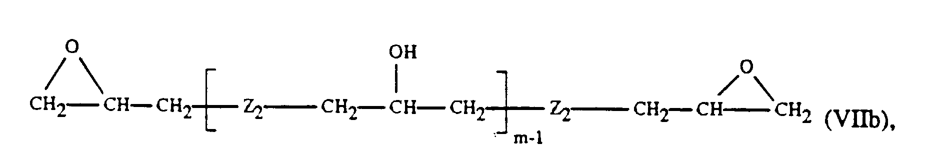 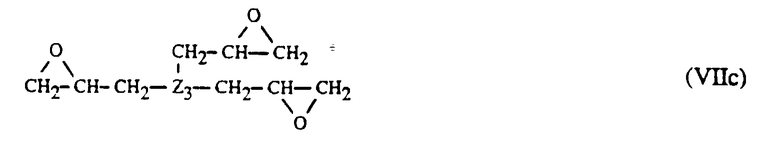 und worin Z₁, Z₂, Z₃ und m die oben definierte Bedeutung besitzen.

2. Verfahren gemäss Anspruch 1, dadurch gekennzeichnet, dass Ar₁ ein Rest der Formeln IIIa bis IIIe ist 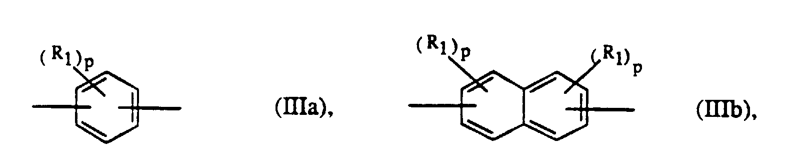 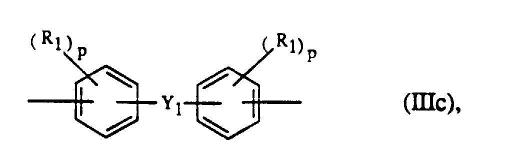 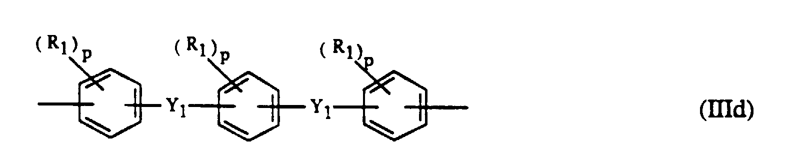 oder 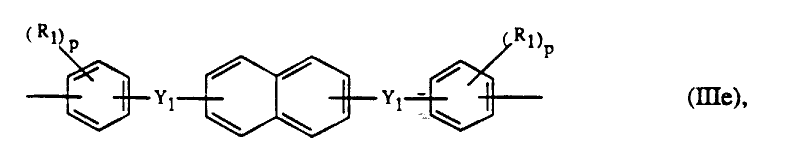 worin R₁ und p die oben definierte Bedeutung besitzen und Y₁ eine direkte Bindung, -SO₂-, -CO-, -S-, -SO-, -CH₂-, -C(CH₃)₂-, -C(C₆H₅)₂-, -C(CH₃)(C₆H₅)- oder -C(CF₃)₂- ist.

3. Verfahren gemäss Anspruch 1, dadurch gekennzeichnet, dass Z₁ ein Rest der Formeln IVa bis IVg ist 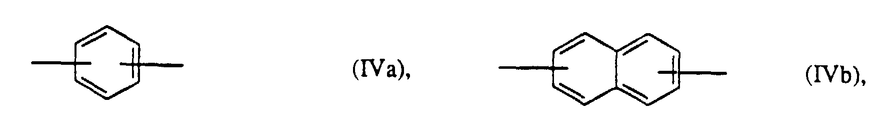 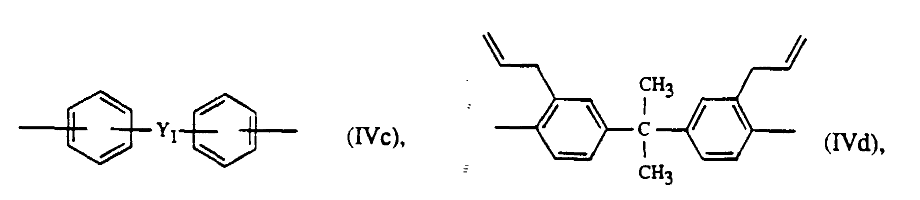 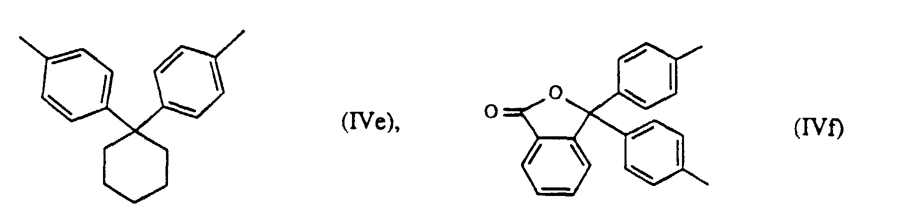 oder 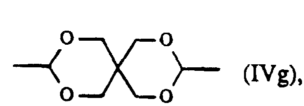 worin Y₁ die in Anspruch 2 definierte Bedeutung besitzt.

4. Verfahren gemäss Anspruch 1, dadurch gekennzeichnet, dass Z₂ ein Rest der Formeln Va bis Vj ist

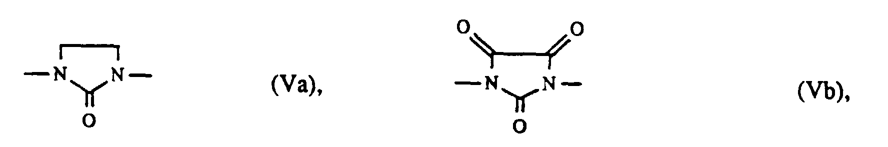

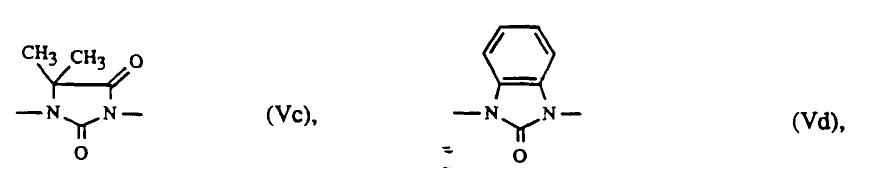

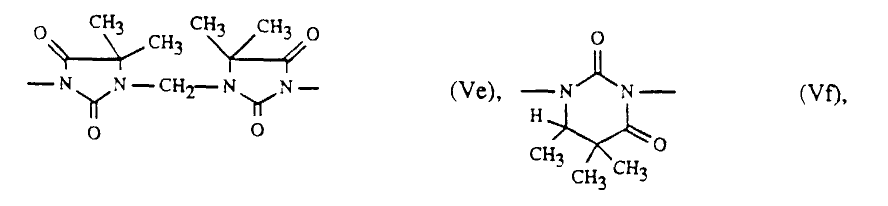

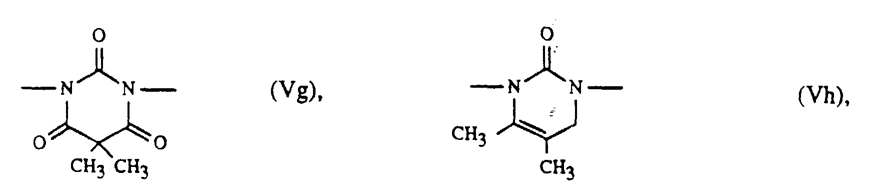

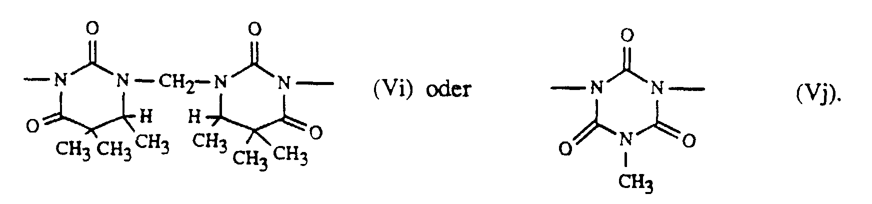

5. Verfahren gemäss Anspruch 2, dadurch gekennzeichnet, dass Ar₁ ausgewählt wird aus der Gruppe bestehend aus

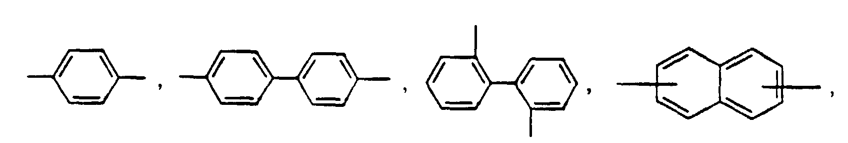

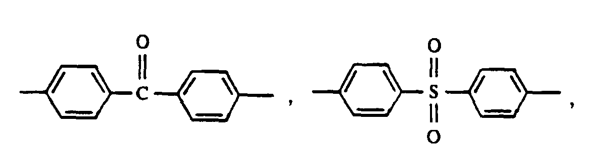

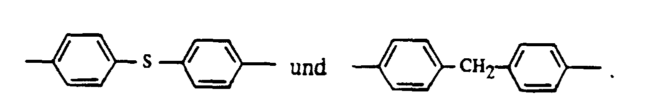

6. Verfahren gemäss Anspruch 1, dadurch gekennzeichnet, dass Ar₂ 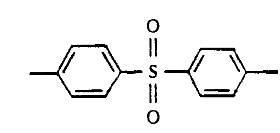 ist.

7. Verfahren gemäss Anspruch 3, dadurch gekennzeichnet, dass Z₁ ausgewählt wird aus der Gruppe bestehend aus

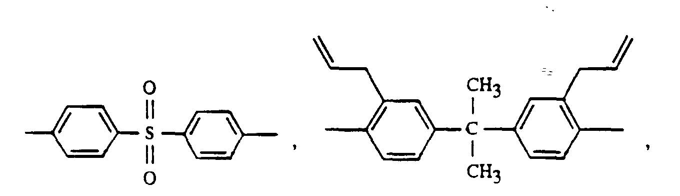

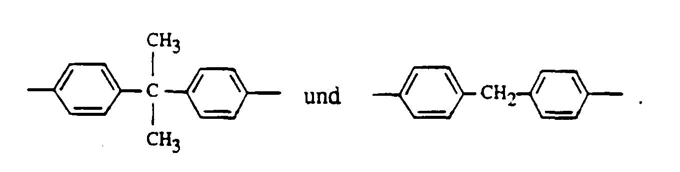

8. Verfahren gemäss Anspruch 1, dadurch gekennzeichnet, dass Z₃ ausgewählt wird aus der Gruppe bestehend aus 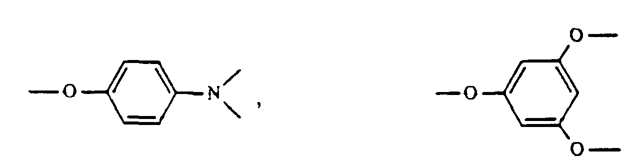 und

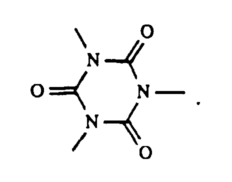

9. Verfahren gemäss Anspruch 1, dadurch gekennzeichnet, dass das Molekulargewicht (Zahlenmittel) der Segmente der Formel I 8'000 bis 20'000 beträgt, wenn ausschliesslich Strukturen der Formel IIa und/oder IIb vorliegen bzw. 2000 bis etwa 20'000, wenn mehr als 0,1 Gew.% Strukturen der Formel IIc vorliegen.

10. Verfahren gemäss Anspruch 1, dadurch gekennzeichnet, dass das Molekulargewicht (Zahlenmittel) der Segmente der Formei I 8'000 bis 20'000 beträgt, wenn ausschliesslich Strukturen der Formel IIa und/oder IIb vorliegen bzw. 2000 bis etwa 20'000, wenn mehr als 0,1 Gew.% Strukturen der Formel IIc vorliegen, dass Ar₁ ausgewählt wird aus der Gruppe bestehend aus 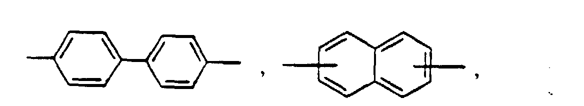 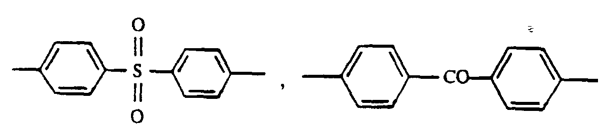 und 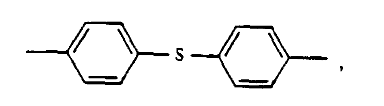 und dass Ar₂ ein Rest der Formel 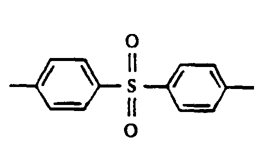 ist.

11. Verfahren gemäss Anspruch 1, dadurch gekennzeichnet, dass Z₁ ausgewählt wird aus der Gruppe bestehend aus 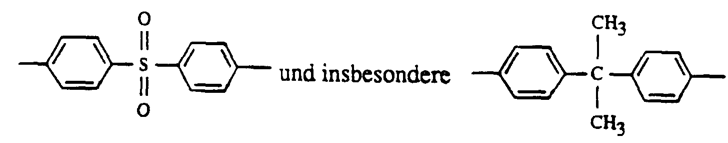 und 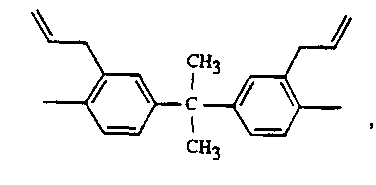 und dass m eine ganze Zahl von 1 bis 3 ist.

12. Verfahren gemäss Anspruch 1, dadurch gekennzeichnet, dass diese zu 95-99,8 Gew.% aus Segmenten der Formel I, worin R ein wiederkehrendes Strukturelement der Formel Ia ist, und zu 0,2-5 Gew.% aus Segmenten der Formel IIa bestehen, worin m 1 oder 2 ist und wobei die Gewichtsangaben auf das gesamte Polymere bezogen sind.

13. Verfahren gemäss Anspruch 1, dadurch gekennzeichnet, dass der Anteil der Segmente der Formel IIa, IIb und/oder IIc 0,2-2 Gew.%, bezogen auf das Gesamtpolymere beträgt.

14. Lösung enthaltend etwa 1 bis 75 Gew.%, bezogen auf die Lösung, eines Polyarylenethersulfons gemäss Anspruch 1 gelöst in einem organischen Lösungsmittel.

## Claims (Claims for the following Contracting State(s): DE, FR, GB, IT, NL, SE)

1. A substantially linear polyarylene ether sulfone having a reduced viscosity of about 0.25 to about 1.5 dl/g (measured in a 1% solution in DMF at 25°C) and consisting essentially of 95-99.8% by weight of segments of formula I and of 5-0.2% by weight of segments of formula IIa, formula IIb and/or formula IIc
―O⁅R⁆ , (I) 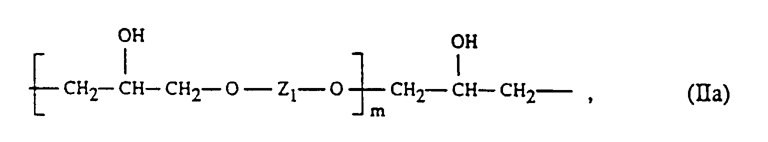 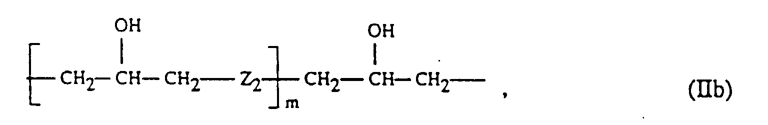 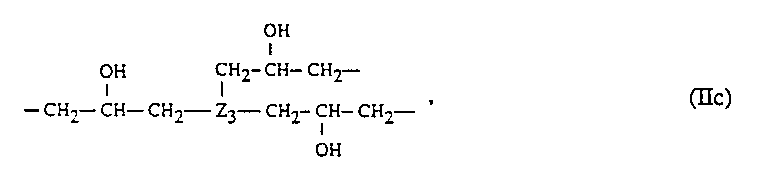
the percentages by weight being based on the entire polymer and the molecular weight (number average) of the segments of formula I being 6000 to about 60 000, if there are solely structural units of formula IIa and/or IIb, and 1000 to about 60 000, if there are more than 0.1 % by weight of structural units of formula IIc, and R consists of the recurring structural units of formula Ia and/or of up to 99.8% by weight, based on the total polymer, of recurring structural units of formula Ib 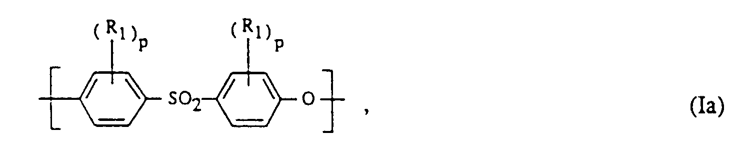 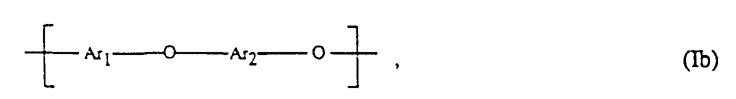 wherein R₁ is C₁-C₆alkyl, C₃-C₁₀alkenyl, phenyl or halogen, p is an integer from 0 to 4, Ar₁ is a divalent carbocyclic aromatic radical and Ar₂ is a radical of formulae IIIc, IIId or IIIe 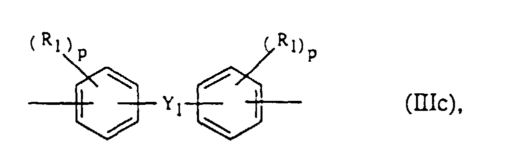 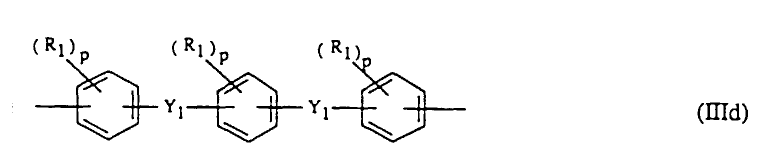 or 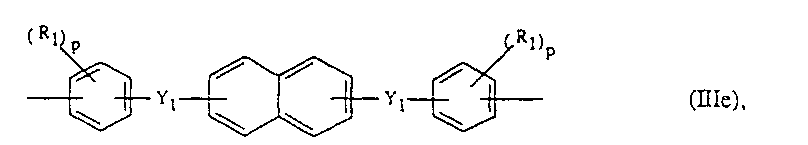 wherein Y₁ is -SO₂-, Z₁ is a divalent radical of a cycloaliphatic, aromatic or araliphatic dihydroxy compound after removal of both hydroxyl groups, Z₂ is a divalent radical of a cycloaliphatic, aromatic or araliphatic di-secondary amino compound after removal of both N-hydrogen atoms, m is an integer from 1 to about 10, and Z₃ is a trivalent radical of a cycloaliphatic, aromatic or araliphatic compound containing hydroxy and/or amino groups after removal of the hydroxyl groups and/or amino hydrogen atoms , which radicals Ar₁, Ar₂, Z₁, Z₂ and Z₃ may be substituted by one to four C₁-C₆alkyl groups, C₃-C₁₀alkenyl groups, phenyl groups or halogen atoms, and in which radicals Z₁, Z₂ and Z₃ one, two, three or four ring carbon atoms may be replaced by oxygen, sulfur and/or nitrogen atoms.

2. A polyether sulfone according to claim 1, wherein Ar₁ is a radical of the formulae IIIa to IIIe 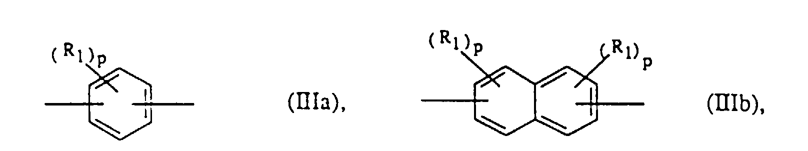 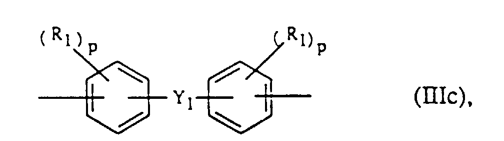 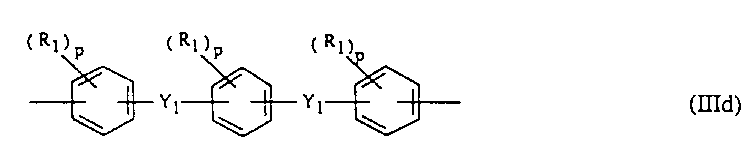 or 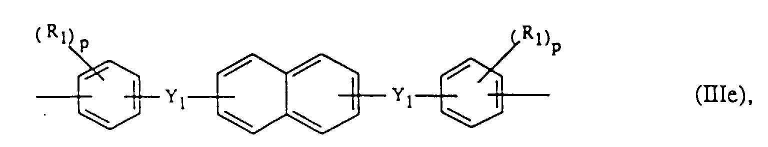 wherein R₁ and p are as defined above, Y₁ is a direct bond, -SO₂-, -CO-, -S-, -SO-, -CH₂-, -C(CH₃)₂-, -C(C₆H₅)₂-, -C(CH₃)(C₆H₅)- or -C(CF₃)₂-.

3. A polyether sulfone according to claim 1, wherein Z₁ is a radical of formulae IVa to IVg 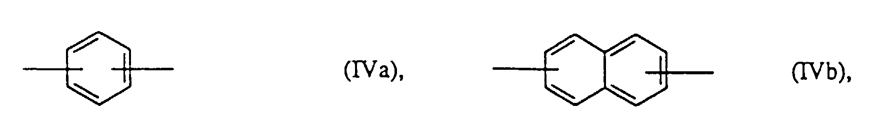 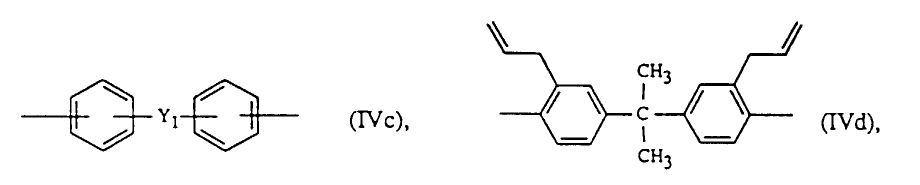 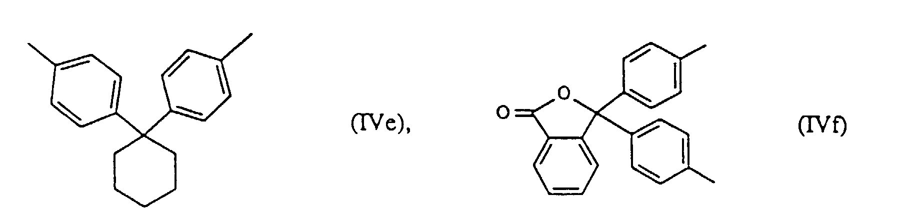 or 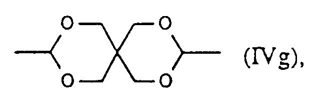 wherein Y₁ is as defined in claim 2.

4. A polyether sulfone according to claim 1, wherein Z₂ is a radical of formulae Va to Vj

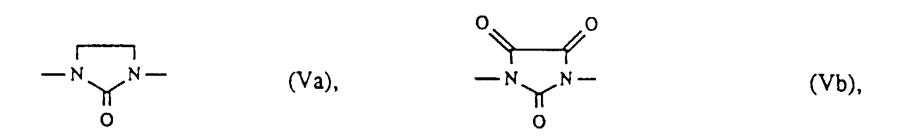

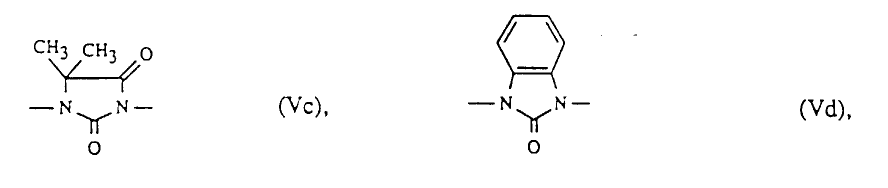

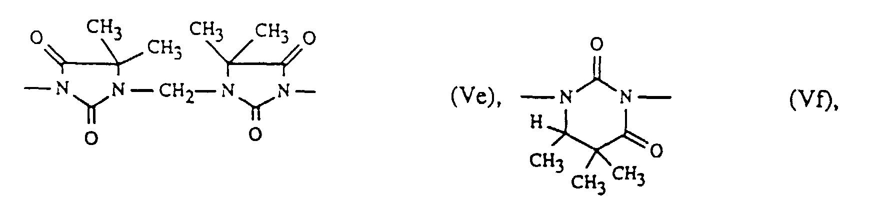

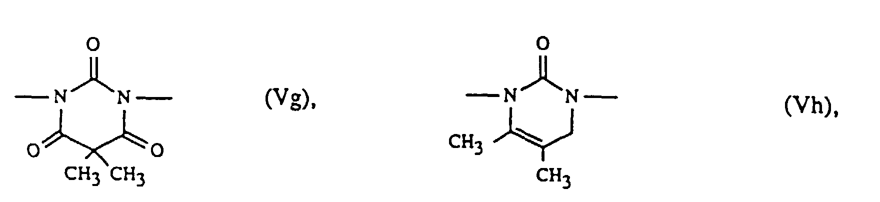

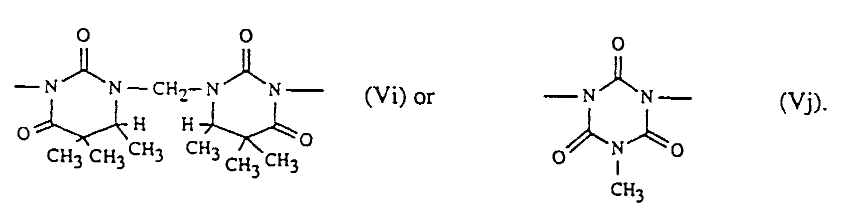

5. A polyether sulfone according to claim 2, wherein Ar₁ is selected from the group consisting of 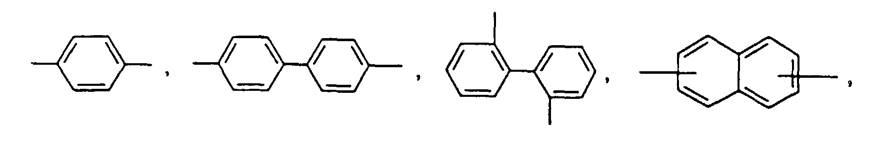 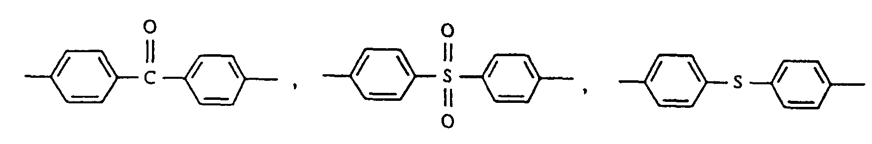 and

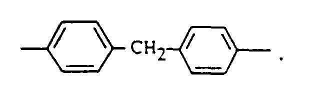

6. A polyether sulfone according to claim 1, wherein Ar₂ is

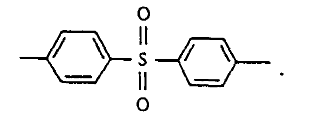

7. A polyether sulfone according to claim 3, wherein Z₁ is selected from the group consisting of

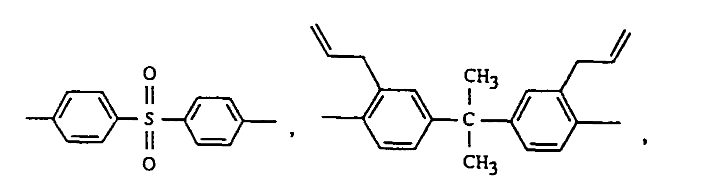

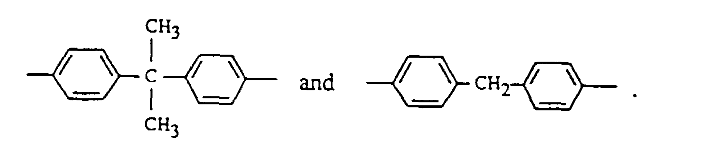

8. A polyether sulfone according to claim 1, wherein Z₃ is selected from the group consisting of 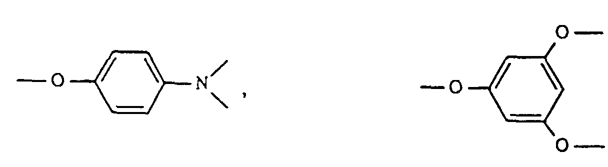 and

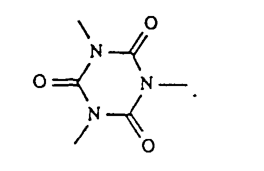

9. A polyether sulfone according to claim 1, wherein the segments of formula I have a molecular weight (number average) of 8000 to 20 000, if there are solely structural units of formula IIa and/or IIb, and 2000 to about 20 000, if there are more than 0.1 % by weight of structural units of formula IIc .

10. A polyether sulfone according to claim 1, wherein the molecular weight (number average) of the segments of formula I is 8000 to 20 000, if there are solely structural units of formula IIa and/or IIb, and 2000 to about 20 000, if there are more than 0.1 % by weight of structural units of formula IIc, and wherein Ar₁ is selected from the group consisting of 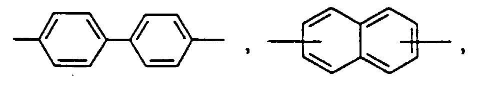 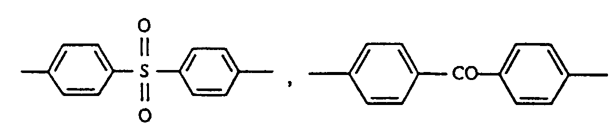 and 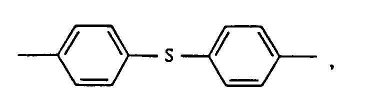 and Ar₂ is a radical of formula

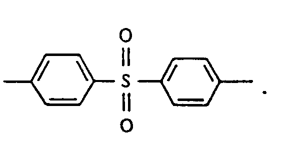

11. A polyether sulfone according to claim 1, wherein
Z₁ is selected from the group consisting of 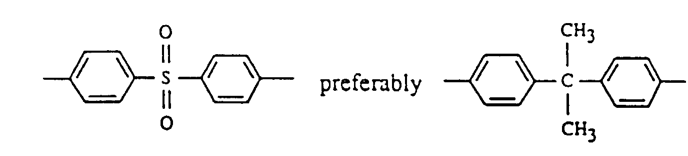 and 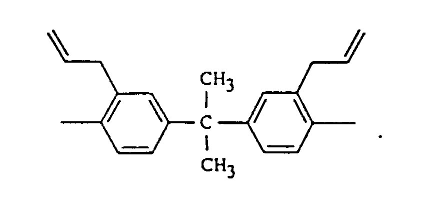 and m is an integer from 1 to 3.

12. A polyether sulfone according to claim 1 consisting of 95-99.8% b.wt. of segments of formula I, wherein R is a recurring structural unit of formula Ia, and 0.2-5% by weight of segments of formula IIa, wherein m is 1 or 2, said percentages being based on the total polymer.

13. A polyether sulfone according to claim 1, wherein the proportion of segments of formula IIa, IIb and/or IIc is 0,2-2% by weight, based on the total polymer.

14. A process for the preparation of a polyether sulfone according to claim 1, which comprises reacting 95-99.8% by weight of hydroxyl-terminated polyarylene ether sulfone prepolymers of formula VI
HO―R―H , (VI)
wherein R is as defined in claim 1, with 5-0.2% by weight of a glycidyl compound of formula VIIa, formula VIIb and/or formula VIIc, the amounts by weight being based on the total mixture, 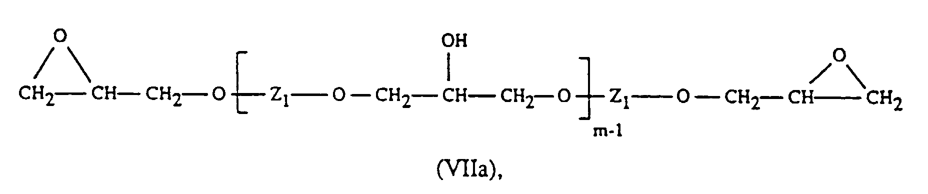 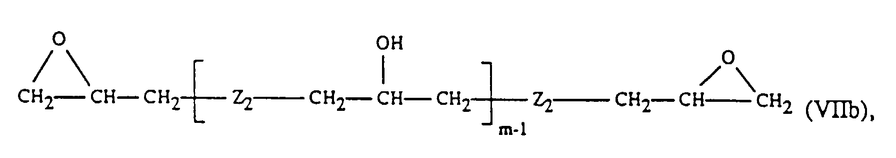 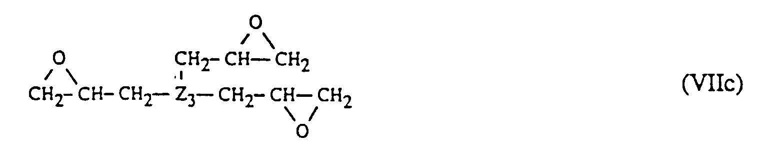 and wherein Z₁, Z₂, Z₃ and m are as defined in claim 1.

15. A solution containing about 1 to 75% by weight, based on said solution, of a polyarylene ether sulfone according to claim 1 in an organic solvent.

## Claims (Claims for the following Contracting State(s): ES)

1. A process for the preparation of a substantially linear polyarylene ether sulfone having a reduced viscosity of about 0.25 to about 1.5 dl/g (measured in a 1% solution in DMF at 25°C) and consisting essentially of 95-99.8% by weight of segments of formula I and of 5-0.2% by weight of segments of formula IIa, formula IIb and/or formula IIc
―O⁅R⁆ , (I) 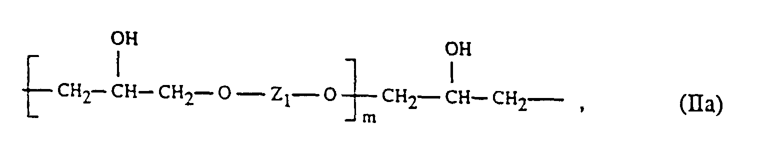 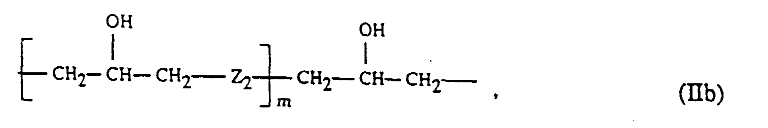 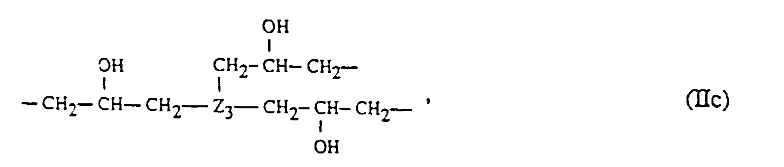
the percentages by weight being based on the entire polymer and the molecular weight (number average) of the segments of formula I being 6000 to about 60 000, if there are solely structural units of formula IIa and/or IIb, and 1000 to about 60 000, if there are more than 0.1 % by weight of structural units of formula IIc, and R consists of the recurring structural units of formula Ia and/or of up to 99.8% by weight, based on the total polymer, of recurring structural units of formula Ib 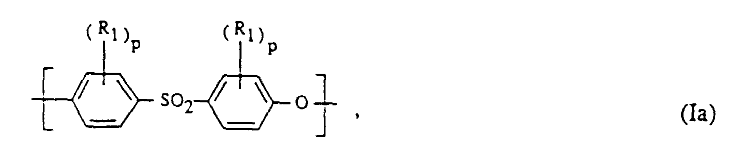 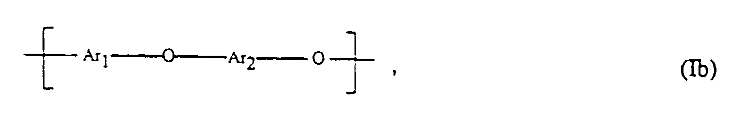 wherein R₁ is C₁-C₆alkyl, C₃-C₁₀alkenyl, phenyl or halogen, p is an integer from 0 to 4, Ar₁ is a divalent carbocyclic aromatic radical and Ar₂ is a radical of formulae IIIc, IIId or IIIe 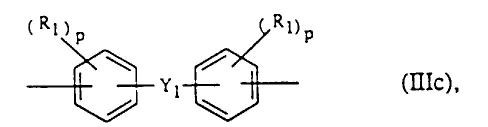 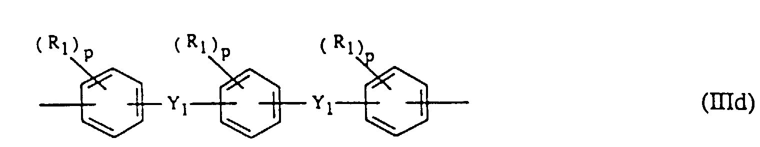 or 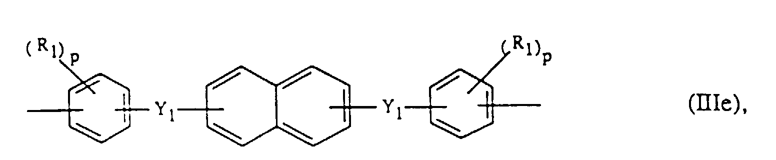 wherein Y₁ is -SO₂-, Z₁ is a divalent radical of a cycloaliphatic, aromatic or araliphatic dihydroxy compound after removal of both hydroxyl groups, Z₂ is a divalent radical of a cycloaliphatic, aromatic or araliphatic di-secondary amino compound after removal of both N-hydrogen atoms, m is an integer from 1 to about 10, and Z₃ is a trivalent radical of a cycloaliphatic, aromatic or araliphatic compound containing hydroxy and/or amino groups after removal of the hydroxyl groups and/or amino hydrogen atoms, which radicals Ar₁, Ar₂, Z₁, Z₂ and Z₃ may be substituted by one to four C₁-C₆alkyl groups, C₃-C₁₀alkenyl groups, phenyl groups or halogen atoms, and in which radicals Z₁, Z₂ and Z₃ one, two, three or four ring carbon atoms may be replaced by oxygen, sulfur and/or nitrogen atoms,
characterized by reacting 95-99.8 % by weight of hydroxy-terminated polyarylene ether sulfone prepolymers of formula VI
HO―R―H,
wherein R is as defined above, with 5-0.2 % by weight of a glycidyl compound of formula VIIa, formula VIIb and/or formula VIIc, the amounts by weight being based on the total mixture. 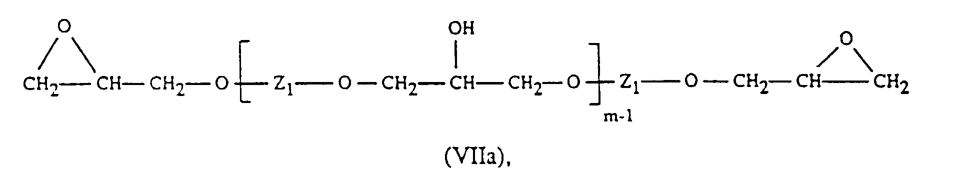 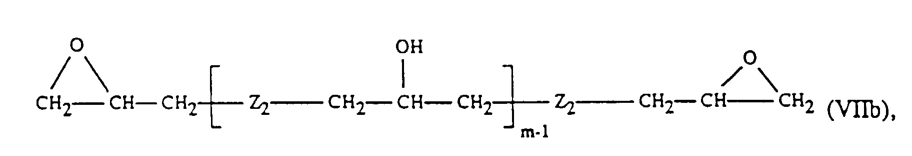 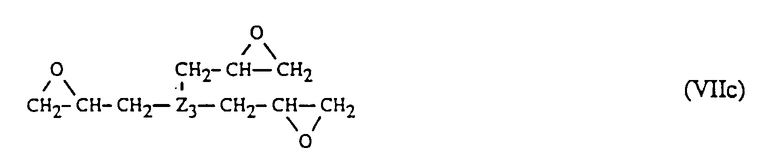 and wherein Z₁, Z₂, Z₃ and m are as defined above.

2. The process of claim 1, wherein Ar₁ is a radical of formulae IIIa to IIIe 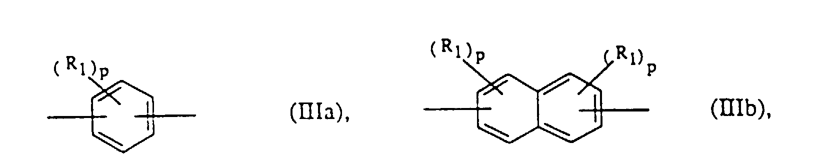 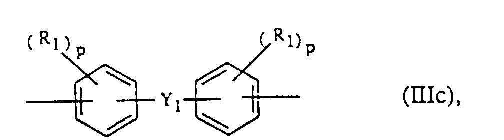 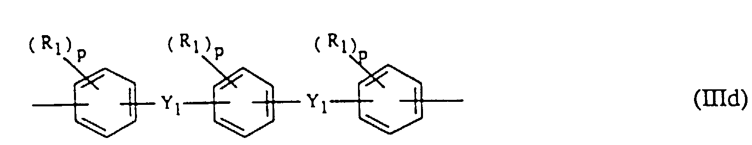 or 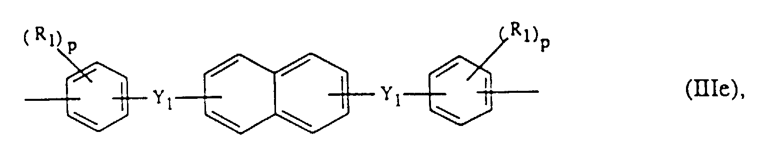 wherein R₁ and p are as defined above, Y₁ is a direct bond, -SO₂-, -CO-, -S-, -SO-, -CH₂-, -C(CH₃)₂-, -C(C₆H₅)₂-, -C(CH₃)(C₆H₅)- or -C(CF₃)₂-.

3. The process of claim 1, wherein Z₁ is a radical of formulae IVa to IVg 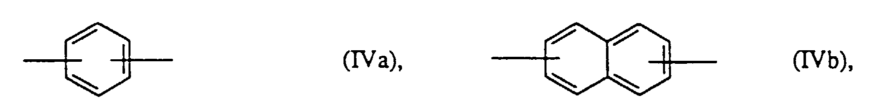 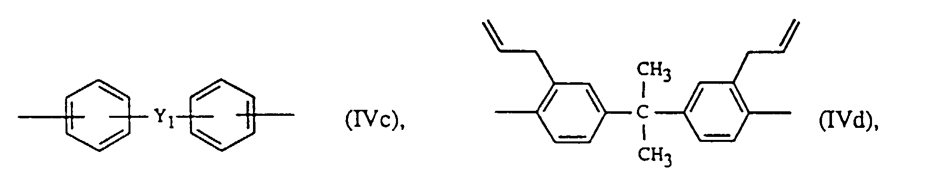 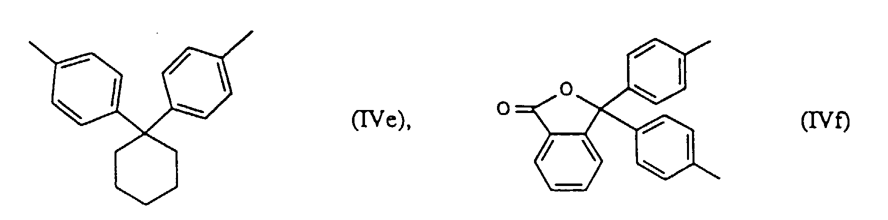 or 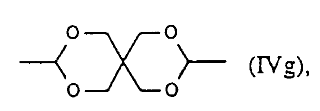 wherein Y₁ is as defined in claim 2.

4. The process of claim 1, wherein Z₂ is a radical of formulae Va to Vj

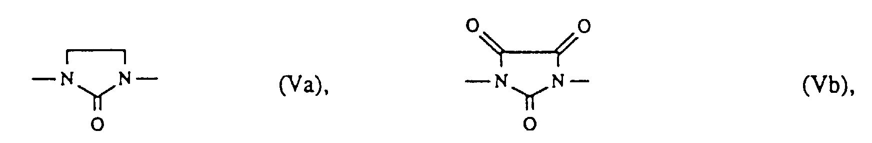

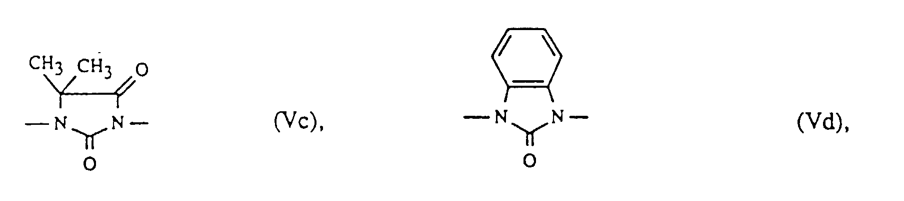

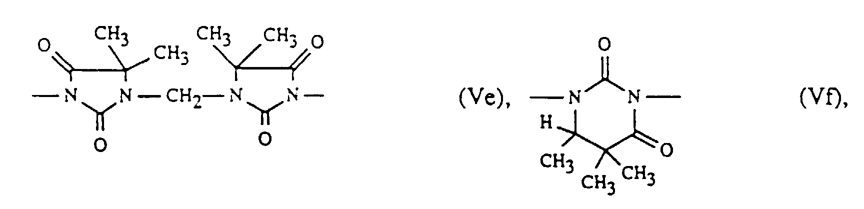

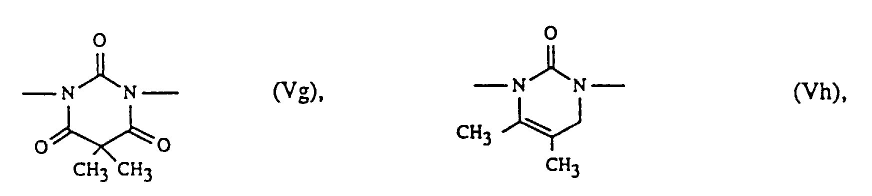

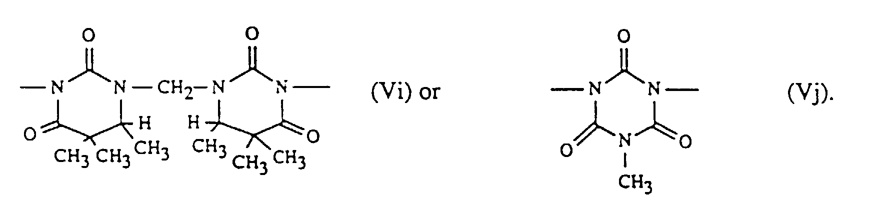

5. The process of claim 2, wherein Ar₁ is selected from the group consisting of 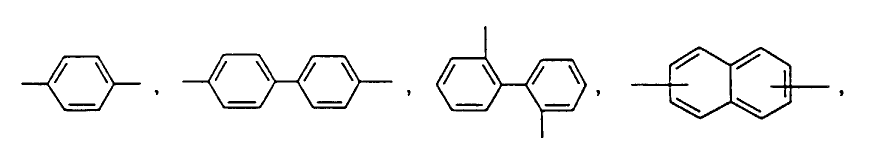 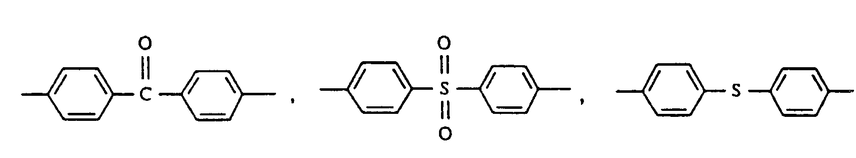 and

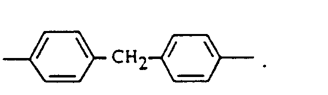

6. The process of claim 1, wherein Ar₂ is

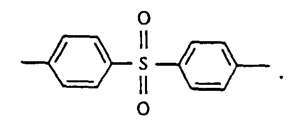

7. The process of claim 3,wherein Z₁ is selected from the group consisting of

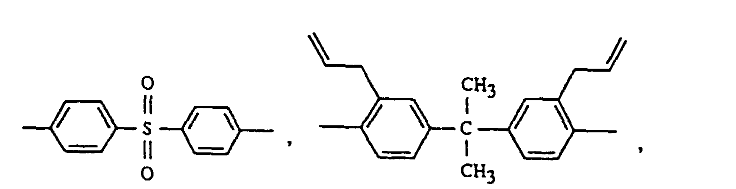

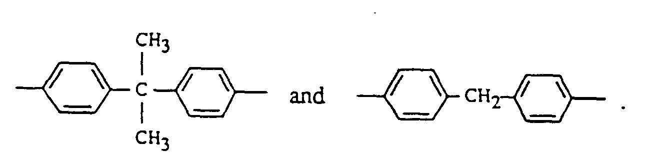

8. The process of claim 1, wherein Z₃ is selected from the group consisting of 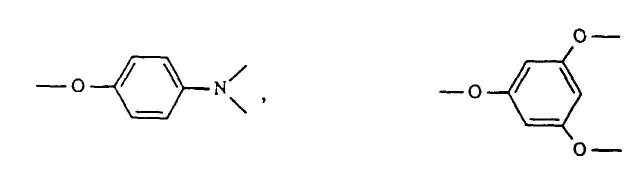 and

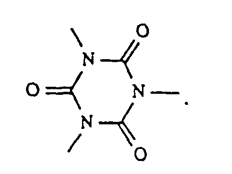

9. The process of claim 1, wherein the segments of formula I have a molecular weight (number average) of 8000 to 20 000, if there are solely structural units of formula IIa and/or IIb, and 2000 to about 20 000, if there are more than 0.1 % by weight of structural units of formula IIc.

10. The process of claim 1, wherein the molecular weight (number average) of the segments of formula I is 8000 to 20 000, if there are solely structural units of formula IIa and/or IIb, and 2000 to about 20 000, if there are more than 0.1 % by weight of structural units of formula IIc, Ar₁ is selected from the group consisting of 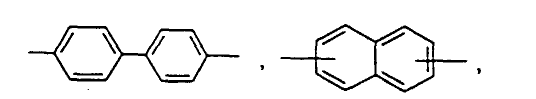 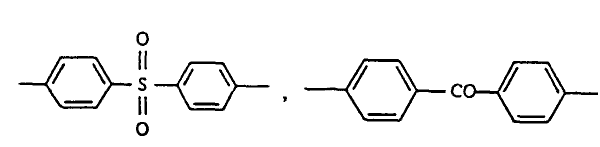 and 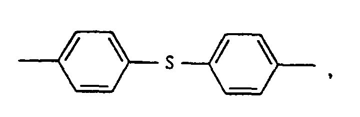 and Ar₂ is a radical of formula

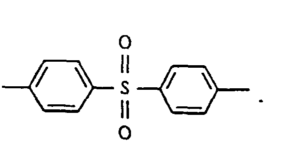

11. The process of claim 1, wherein Z₁ is selected from 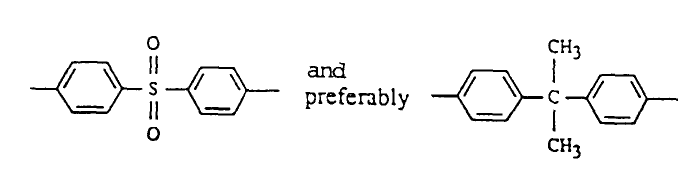 and 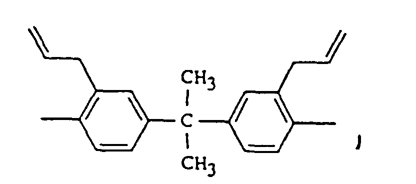 and m is preferably an integer from 1 to 3.

12. The process according to claim 1, characterized in that they consist of 95-99,8% by weight of segments of formula I, wherein R is a recurring structural unit of formula Ia, and 0.2-5% by weight of segments of formula IIa, wherein m is 1 or 2, said percentages being based on the total polymer.

13. The process of claim 1, wherein the proportion of segments of formula IIa, IIb and/or IIc is 0.2-2% by weight, based on the total polymer.

14. A solution containing about 1 to 75% by weight, based on said solution, of a polyarylene ether sulfone according to claim 1 in an organic solvent

## Revendications (Revendications pour l'(les) Etat(s) contractant(s) suivant(s): DE, FR, GB, IT, NL, SE)

1. Polyarylèneéthersulfones sensiblement linéaires ayant une viscosité réduite d'environ 0,25 à environ 1,5 dl/g (mesurée sur une solution à 1 % en masse dans le DMF à 25°C) consistant essentiellement à raison de 95-99,8 % en masse en segments de formule I et à raison de 5-0,2 % en masse en segments de formule IIa, de formule IIb et/ou de formule IIc
―O(̵R)̵ , (I) 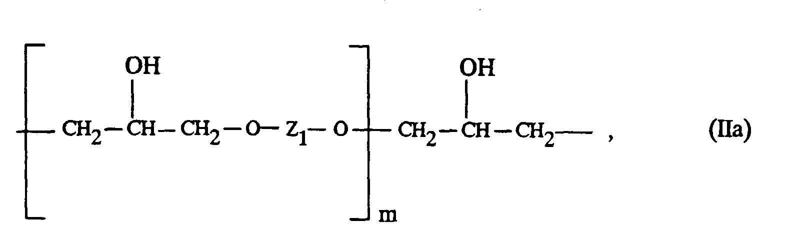 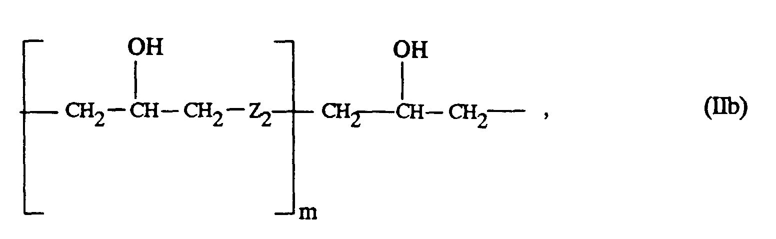 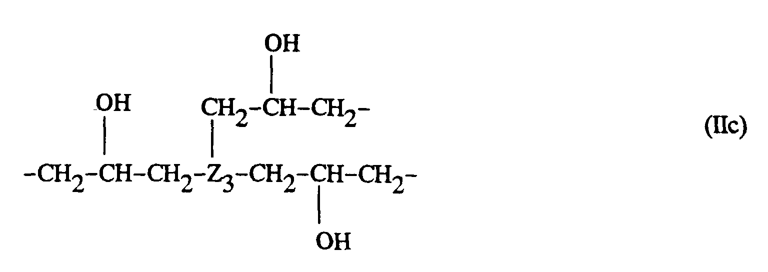
où les indications de masse sont rapportées au polymère total et où la masse moléculaire (moyenne en nombre) des segments de formule I est de 6000 à environ 60 000 lorsqu'il existe exclusivement des structures de formule IIa et/ou IIb, ou de 1 000 à environ 60 000 lorsqu'il existe plus de 0,1 % en masse de structures de formule IIc, et R consiste en les unités structurales récurrentes de formule Ia et/ou consiste à raison de jusqu'à 99,8 % en masse, par rapport au polymère total, en unités structurales récurrentes de formule Ib 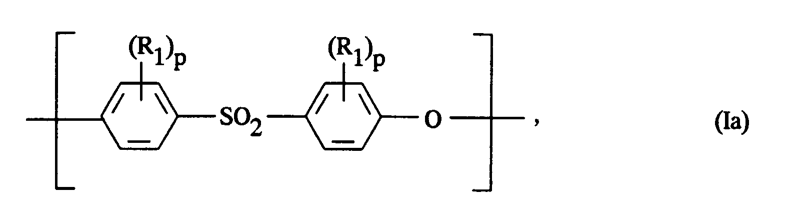 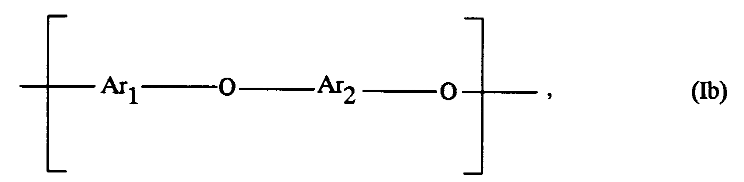 où R₁ représente alkyle en C₁-C₆, alcényle en C₃-C₁₀, phényle ou halogène, p est un nombre entier de 0 à 4, Ar₁ est un reste carbocyclique-aromatique divalent et Ar₂ est un reste des formules IIIc, IIId ou IIIe 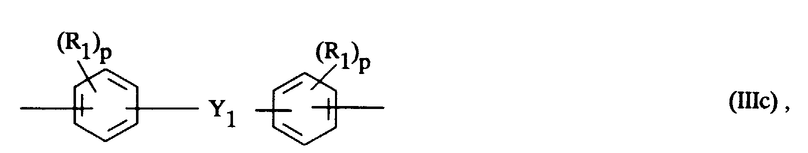 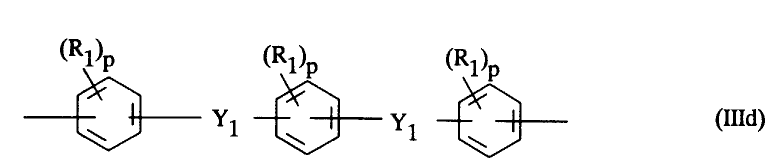 ou 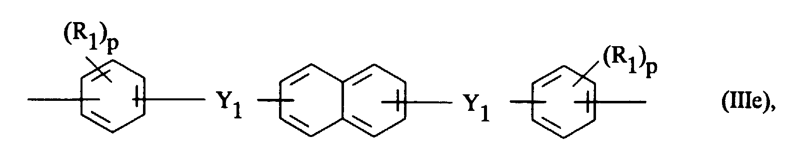 où Y₁ est -SO₂-, Z₁ est un reste divalent d'un composé dihydroxylé cycloaliphatique, aromatique ou araliphatique après l'élimination des deux groupes hydroxyles, Z₂ est un reste divalent d'un composé aminé di-secondaire cycloaliphatique, aromatique ou araliphatique après l'élimination des deux atomes d'hydrogène de N et m représente un nombre entier de 1 à environ 10 et Z₃ représente un reste trivalent d'un composé cycloaliphatique, aromatique ou araliphatique ayant des groupes hydroxyles et/ou amino après l'élimination des atomes d'hydrogène d'hydroxyle et/ou amino, lesdits restes Ar₁, Ar₂, Z₁, Z₂ et Z₃ pouvant éventuellement être substitués par 1 à 4 groupes alkyle en C₁-C₆, groupes alcényle en C₃-C₁₀, groupes phényle ou atomes d'halogène et, dans lesdits restes Z₁, Z₂ et Z₃, 1, 2, 3 ou 4 atomes de carbone cycliques pouvant être remplacés par des atomes d'oxygène, de soufre et/ou d'azote.

2. Polyéthersulfones selon la revendication 1, caractérisées en ce que Ar₁ est un reste des formules IIIa à IIIe 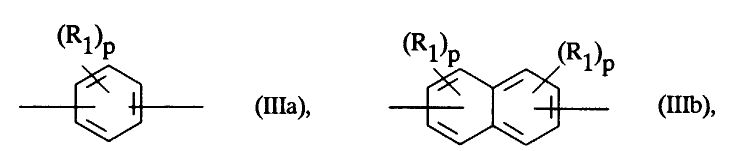 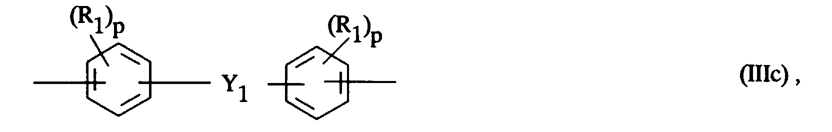 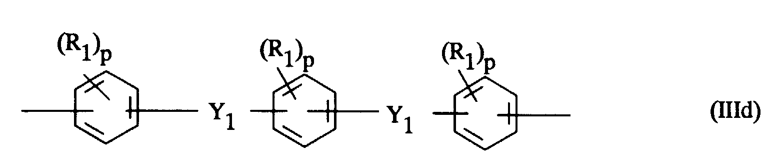 ou 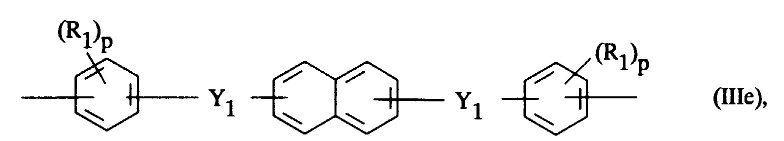 où R₁ et p possèdent la signification définie ci-dessus et Y₁ est une liaison directe, -SO₂-, -CO-, -S-, -SO-, -CH₂-, -C(CH₃)₂-, -C(C₆H₅)₂-, -C(CH₃)(C₆H₅)- ou -C(CF₃)₂-.

3. Polyéthersulfones selon la revendication 1, caractérisées en ce que Z₁ est un reste des formules IVa à IVg 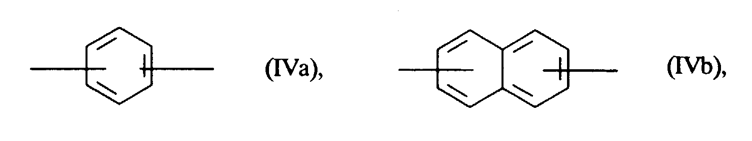 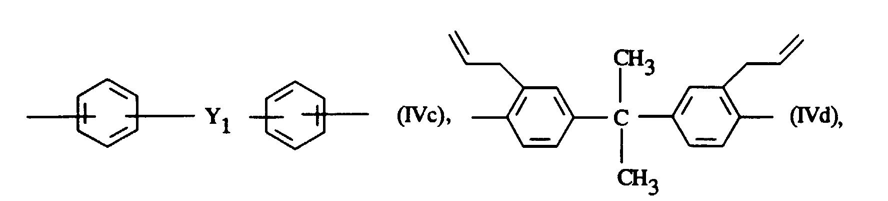 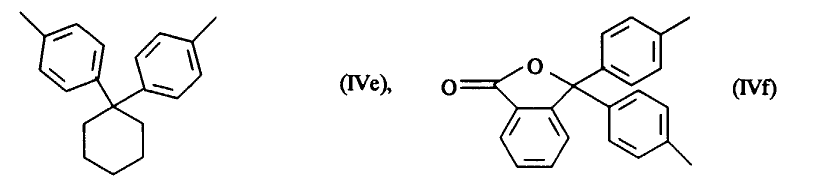 ou 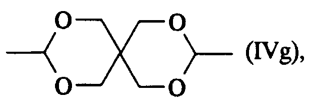 où Y₁ possède la signification définie dans la revendication 2.

4. Polyéthersulfones selon la revendication 1, caractérisées en ce que Z₂ est un reste des formules Va à Vj

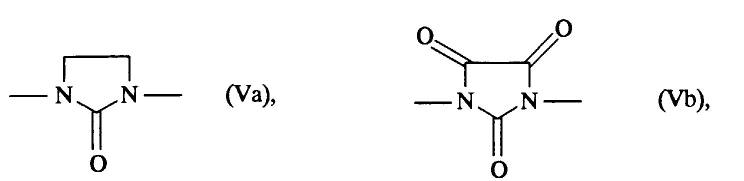

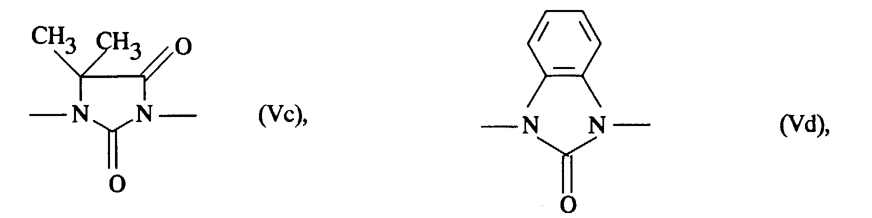

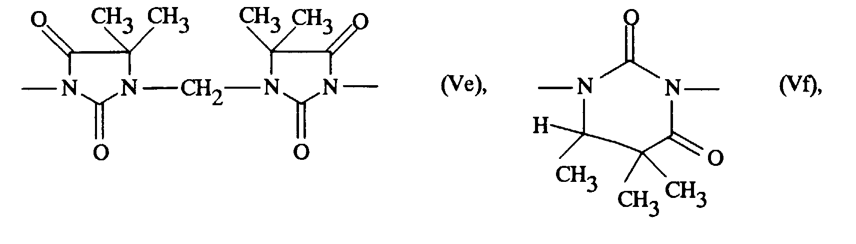

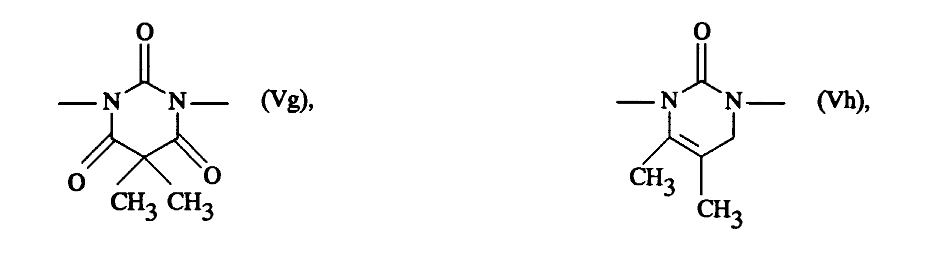

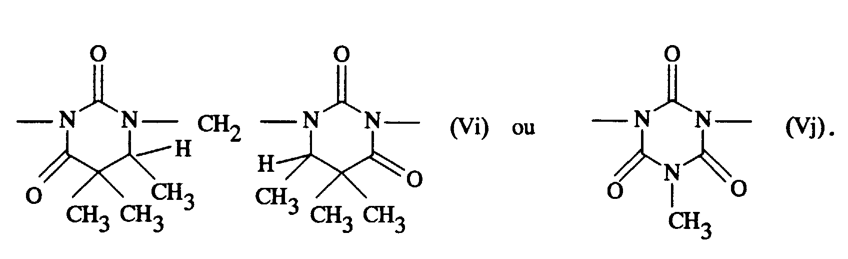

5. Polyéthersulfones selon la revendication 2, caractérisées en ce que Ar₁ est choisi dans le groupe consistant en

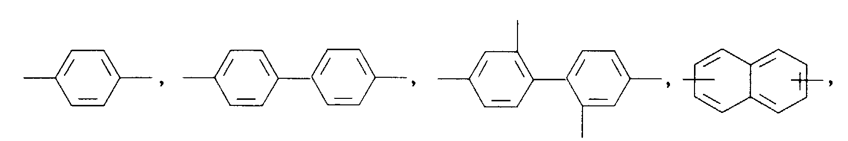

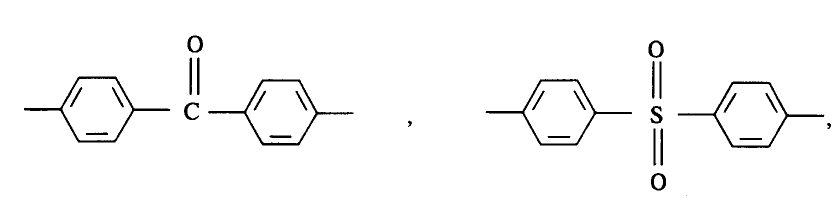

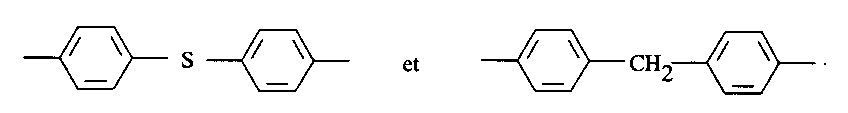

6. Polyethersulfones selon la revendication 1, caractérisées en ce que Ar₂ est

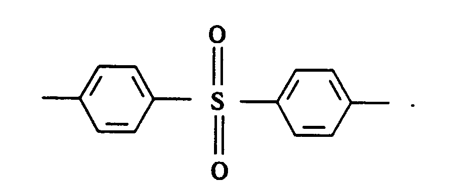

7. Polyéthersulfones selon la revendication 3, caractérisées en ce que Z₁ est choisi dans le groupe consistant en

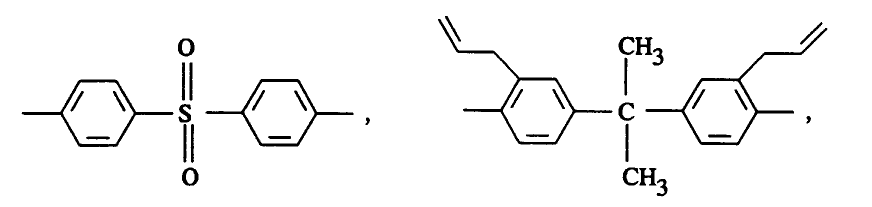

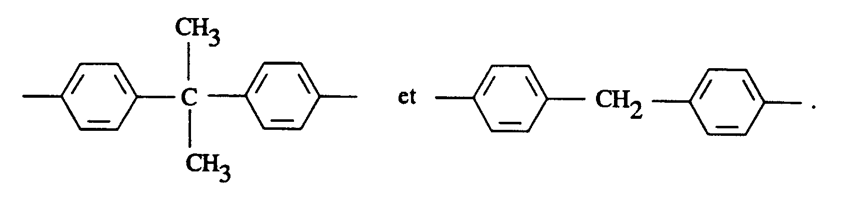

8. Polyéthersulfones selon la revendication 1, caractérisées en ce que Z₃ est choisi dans le groupe consistant en 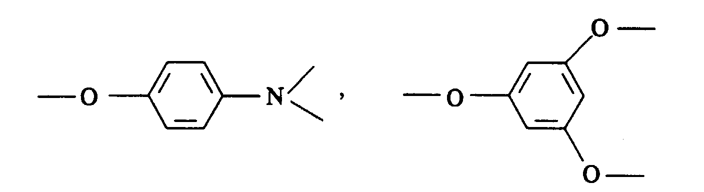 et

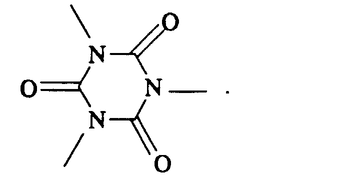

9. Polyéthersulfones selon la revendication 1, caractérisées en ce que la masse moléculaire (moyenne en nombre) des segments de formule I est de 8 000 à 20 000 lorsqu'il existe exclusivement des structures de formule IIa et/ou IIb ou de 2000 à environ 20 000 lorsqu'il existe plus de 0,1 % en masse de structures de formule IIc.

10. Polyéthersulfones selon la revendication 1, caractérisées en ce que la masse moléculaire (moyenne en nombre) des segments de formule I est de 8 000 à 20 000 lorsqu'il existe exclusivement des structures de formule IIa et/ou IIb ou de 2 000 à environ 20 000 lorsqu'il existe plus de 0,1 % en masse de structures de formule IIc, en ce que Ar₁ est choisi dans le groupe consistant en 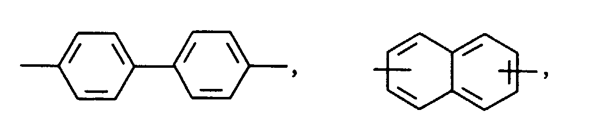 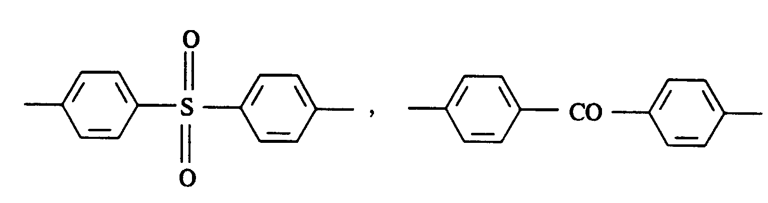 et 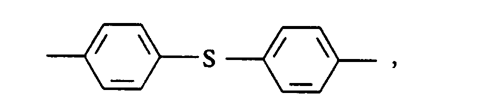 et en ce que Ar₂ est un reste de formule

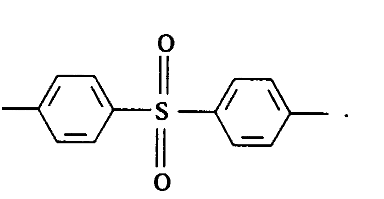

11. Polyéthersulfones selon la revendication 1, caractérisées en ce que Z₁ est choisi dans le groupe consistant en 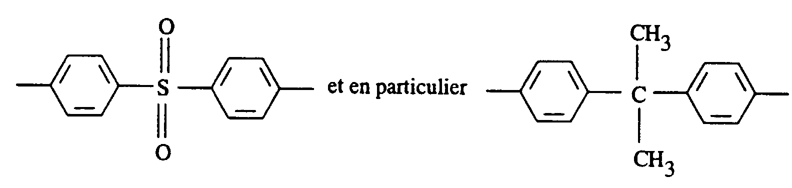 et 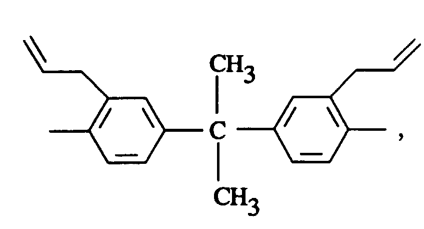 et en ce que m est un nombre entier de 1 à 3.

12. Polyéthersulfones selon la revendication 1, caractérisées en ce que celles-ci consistent à raison de 95-99,8 % en masse en segments de formule I où R est un élément structural récurrent de formule Ia, et à raison de 0,2-5 % en masse en segments de formule IIa où m est égal à 1 ou 2, les indications de masse étant rapportées au polymère total.

13. Polyéthersulfones selon la revendication 1, caractérisées en ce que la proportion des segments de formule IIa, IIb et/ou IIc est de 0,2-2 % en masse par rapport au polymère total.

14. Procédé de préparation des polyéthersulfones selon la revendication 1, caractérisé en ce que l'on fait réagir 95-99,8 % en masse de prépolymères de polyarylèneéthersulfones hydroxyle-terminés de formule VI
HO―R―H , (VI)
où R possède la signification définie dans la revendication 1, avec 5-0,2 % en masse d'un composé glycidyle de formule VIIa, de formule VIIb et/ou de formule VIIc, les indications de masse étant rapportées au mélange total 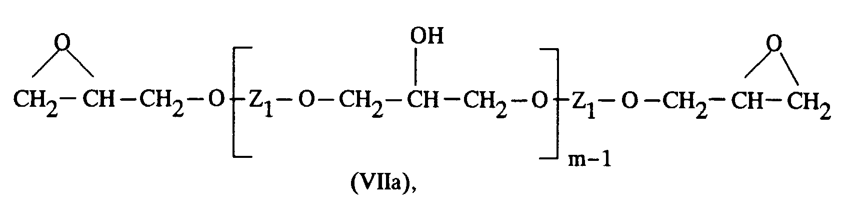 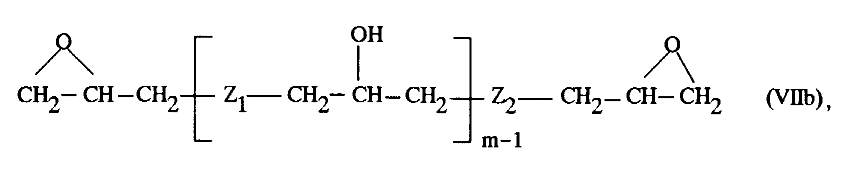 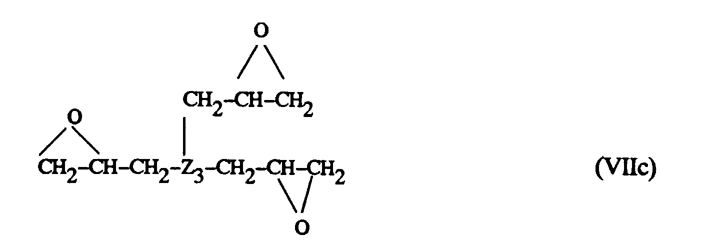 et où Z₁, Z₂, Z₃ et m possèdent la signification définie dans la revendication 1.

15. Solution contenant environ 1 à 75 % en masse, par rapport à la solution, d'une polyarylèneéthersulfone selon la revendication 1 dissoute dans un solvant organique.

## Revendications (Revendications pour l'(les) Etat(s) contractant(s) suivant(s): ES)

1. Procédé de préparation de polyarylèneéthersulfones sensiblement linéaires ayant une viscosité réduite d'environ 0,25 à environ 1,5 dl/g (mesurée sur une solution à 1 % en masse dans le DMF à 25°C) consistant essentiellement à raison de 95-99,8 % en masse en segments de formule I et à raison de 5-0,2 % en masse en segments de formule IIa, de formule IIb et/ou de formule IIc
―O(̵R)̵ , (I) 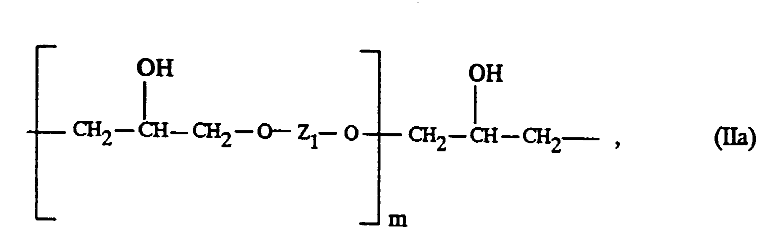 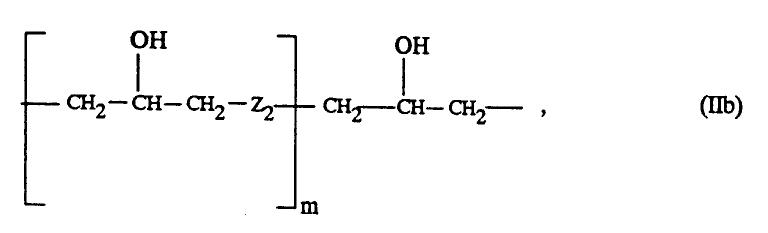 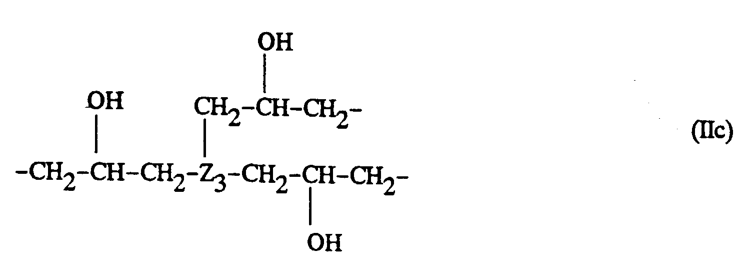
où les indications de masse sont rapportées au polymère total et où la masse moléculaire (moyenne en nombre) des segments de formule I est de 6000 à environ 60 000 lorsqu'il existe exclusivement des structures de formule IIa et/ou IIb, ou de 1 000 à environ 60 000 lorsqu'il existe plus de 0,1 % en masse de structures de formule IIc, et R consiste en les unités structurales récurrentes de formule Ia et/ou consiste à raison de jusqu'à 99,8 % en masse, par rapport au polymère total, en unités structurales récurrentes de formule Ib 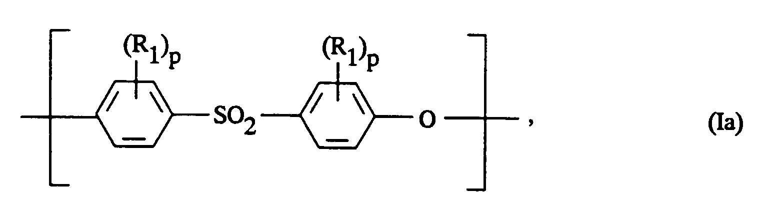 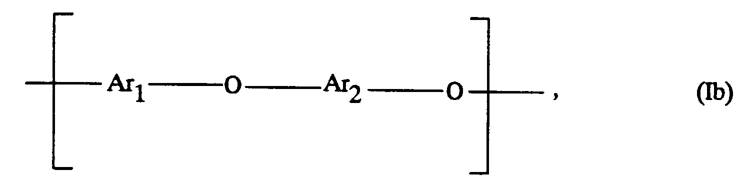 où R₁ représente alkyle en C₁-C₆, alcényle en C₃-C₁₀, phényle ou halogène, p est un nombre entier de 0 à 4, Ar₁ est un reste carbocyclique-aromatique divalent et Ar₂ est un reste des formules IIIc, IIId ou IIIe 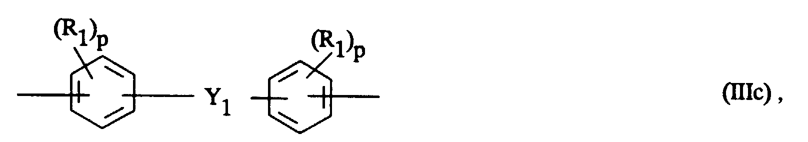 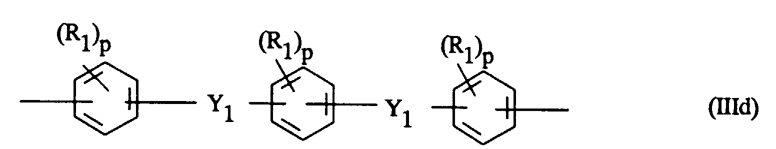 ou 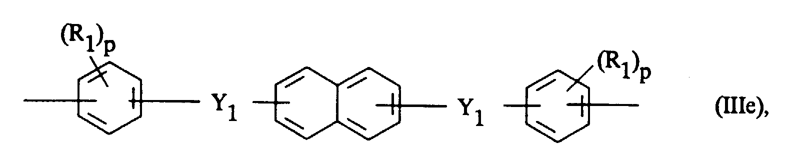 où Y₁ est -SO₂-, Z₁ est un reste divalent d'un composé dihydroxylé cycloaliphatique, aromatique ou araliphatique après l'élimination des deux groupes hydroxyles, Z₂ est un reste divalent d'un composé aminé di-secondaire cycloaliphatique, aromatique ou araliphatique après l'élimination des deux atomes d'hydrogène de N et m représente un nombre entier de 1 à environ 10 et Z₃ représente un reste trivalent d'un composé cycloaliphatique, aromatique ou araliphatique ayant des groupes hydroxyles et/ou amino après l'élimination des atomes d'hydrogène d'hydroxyle et/ou amino, lesdits restes Ar₁, Ar₂, Z₁, Z₂ et Z₃ pouvant éventuellement être substitués par 1 à 4 groupes alkyle en C₁-C₆, groupes alcényle en C₃-C₁₀, groupes phényle ou atomes d'halogène et, dans lesdits restes Z₁, Z₂ et Z₃, 1, 2, 3 ou 4 atomes de carbone cycliques pouvant être remplacés par des atomes d'oxygène, de soufre et/ou d'azote, caractérisé en ce que l'on fait réagir 95-99,8 % en masse de prépolymères de polyarylèneéthersulfones hydroxyle-terminées de formule VI
HO―R―H , (VI)
où R possède la signification définie ci-dessus, avec 5-0,2 % en masse d'un composé glycidyle de formule VIIa, de formule VIIb et/ou de formule VIIc, les indications de masse étant rapportées au mélange total 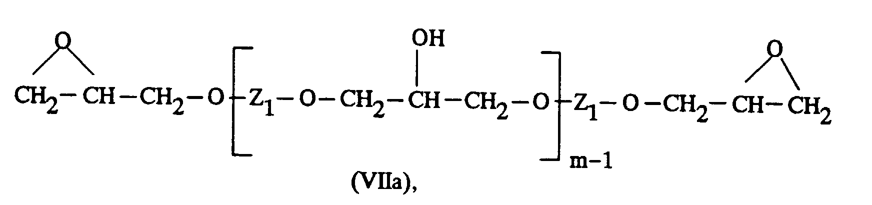 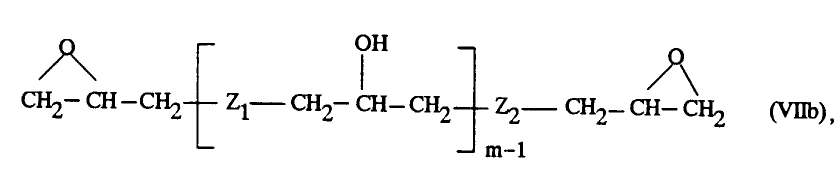 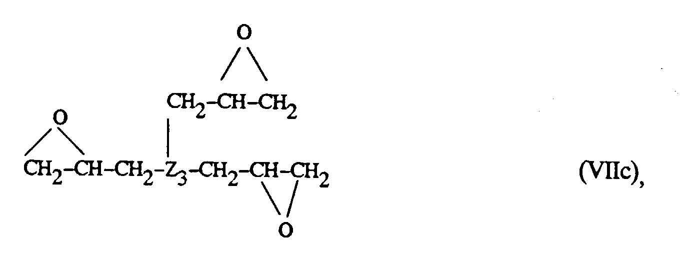 et où Z₁, Z₂, Z₃ et m possèdent la signification définie ci-dessus.

2. Procédé selon la revendication 1, caractérisé en ce que Ar₁ est un reste des formules IIIa à IIIe 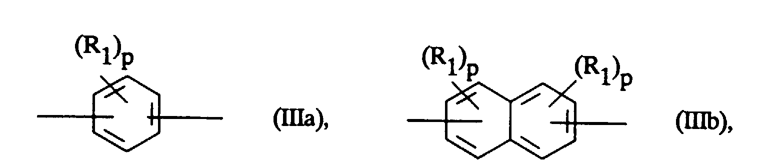 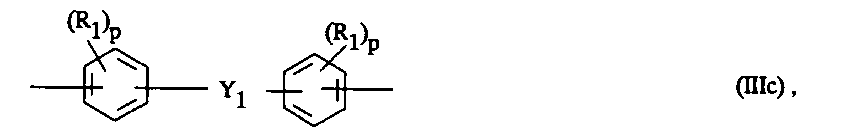 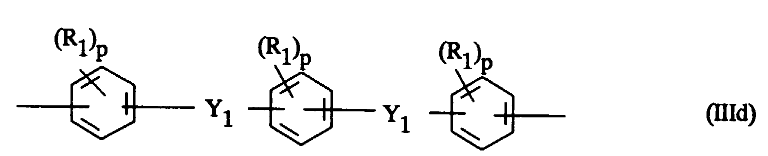 ou 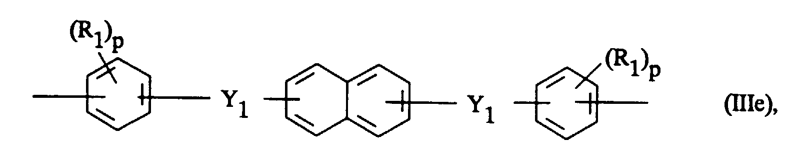 où R₁ et p possèdent la signification définie ci-dessus et Y₁ est une liaison directe, -SO₂-, -CO-, -S-, -SO-, -CH₂-, -C(CH₃)₂-, -C(C₆H₅)₂-, -C(CH₃)(C₆H₅)- ou -C(CF₃)₂-.

3. Procédé selon la revendication 1, caractérisé en ce que Z₁ est un reste des formules IVa à IVg 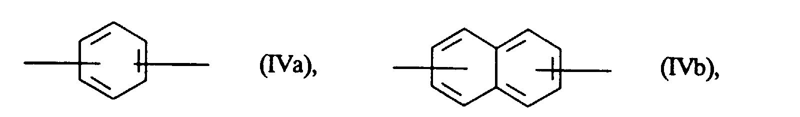 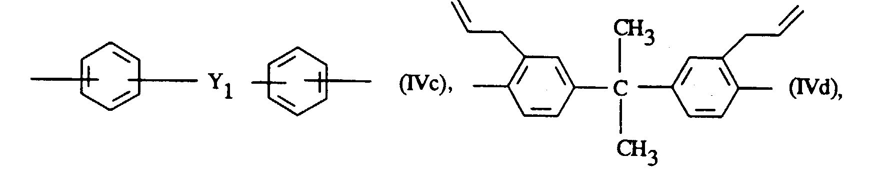 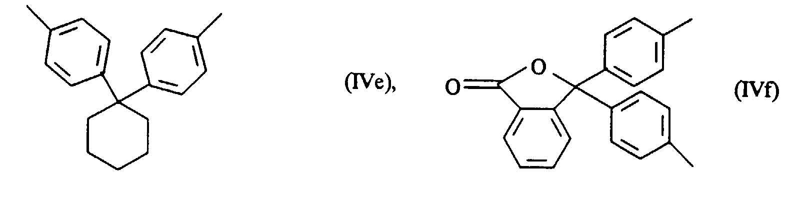 ou 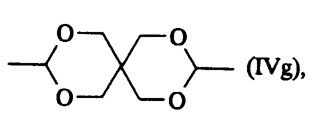 où Y₁ possède la signification définie dans la revendication 2.

4. Procédé selon la revendication 1, caractérisé en ce que Z₂ est un reste des formules Va à Vj

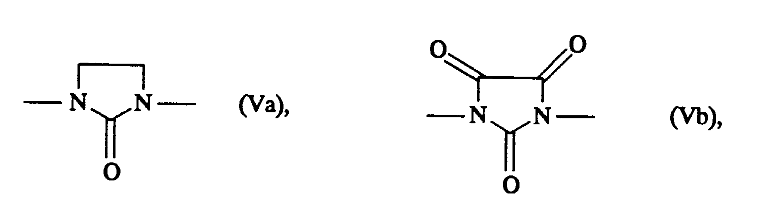

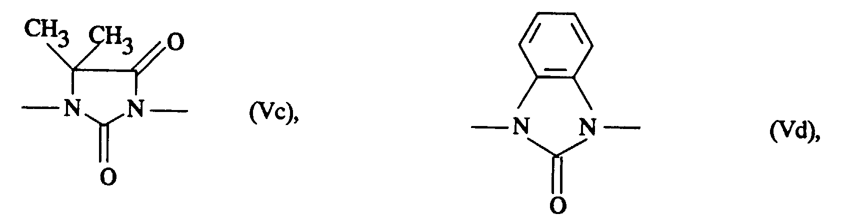

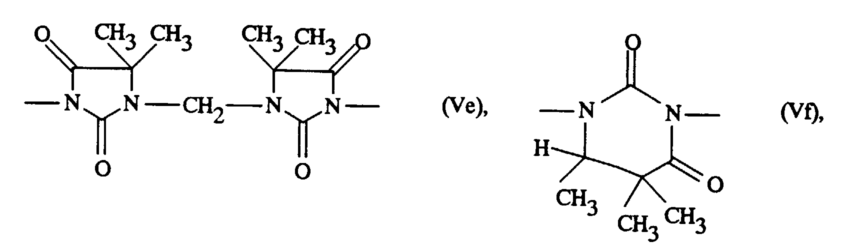

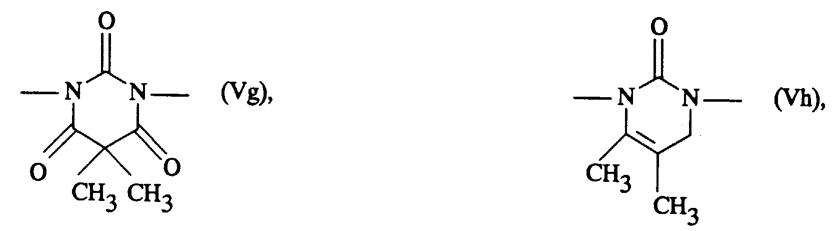

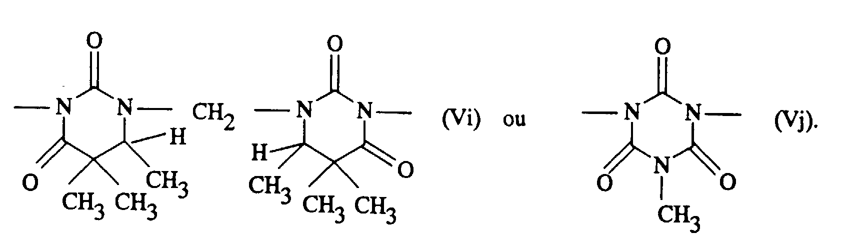

5. Procédé selon la revendication 2, caractérisé en ce que Ar₁ est choisi dans le groupe consistant en

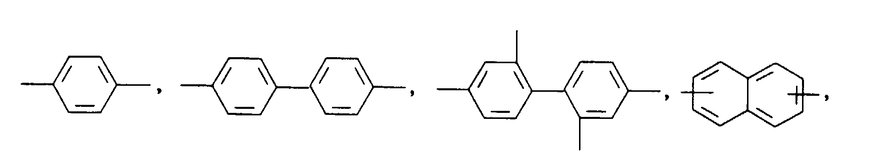

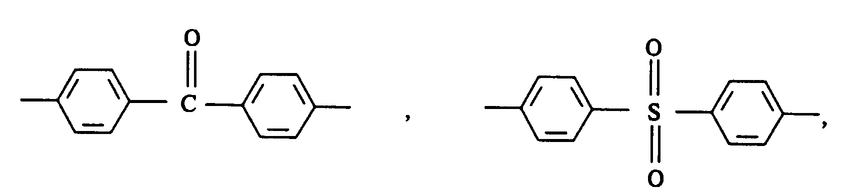

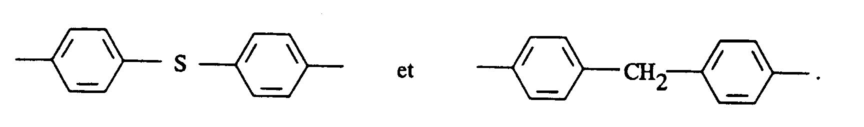

6. Procédé selon la revendication 1, caractérisé en ce que Ar₂ est

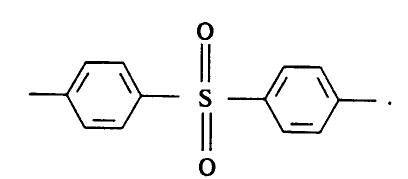

7. Procédé selon la revendication 3, caractérisé en ce que Z₁ est choisi dans le groupe consistant en

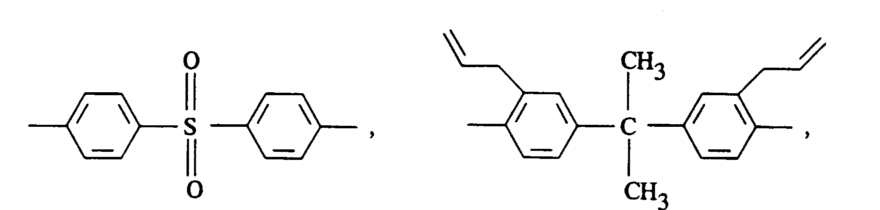

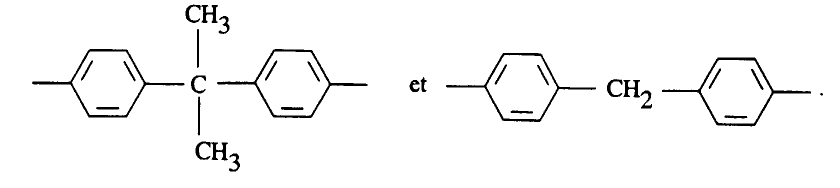

8. Procédé selon la revendication 1, caractérisé en ce que Z₃ est choisi dans le groupe consistant en 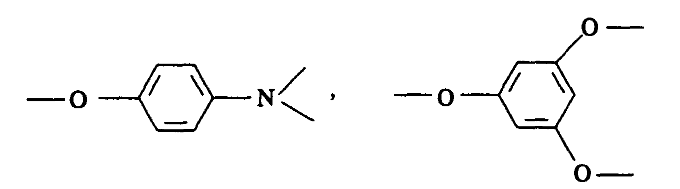 et

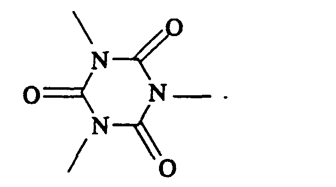

9. Procédé selon la revendication 1, caractérisé en ce que la masse moléculaire (moyenne en nombre) des segments de formule I est de 8 000 à 20 000 lorsqu'il existe exclusivement des structures de formule IIa et/ou IIb ou de 2 000 à environ 20 000 lorsqu'il existe plus de 0,1 % en masse de structures de formule IIc.

10. Procédé selon la revendication 1, caractérisé en ce que la masse moléculaire (moyenne en nombre) des segments de formule I est de 8 000 à 20 000 lorsqu'il existe exclusivement des structures de formule IIa et/ou IIb ou de 2 000 à environ 20 000 lorsqu'il existe plus de 0,1 % en masse de structures de formule IIc, en ce que Ar₁ est choisi dans le groupe consistant en 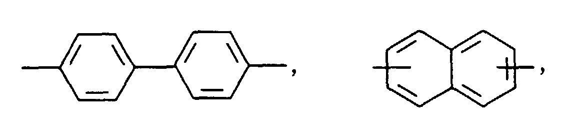 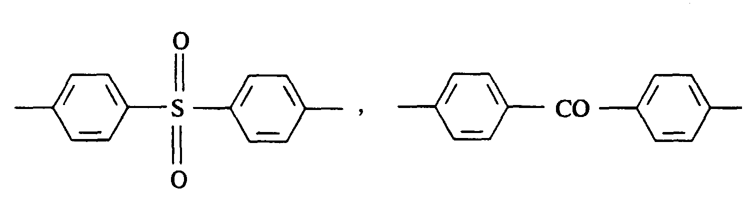 et 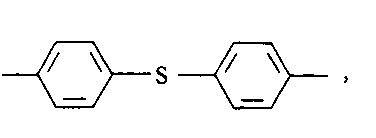 et en ce que Ar₂ est un reste de formule

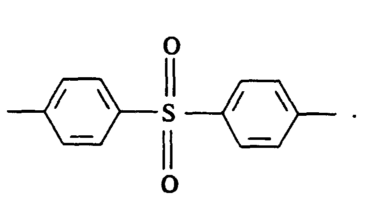

11. Procédé selon la revendication 1, caractérisé en ce que Z₁ est choisi dans le groupe consistant en 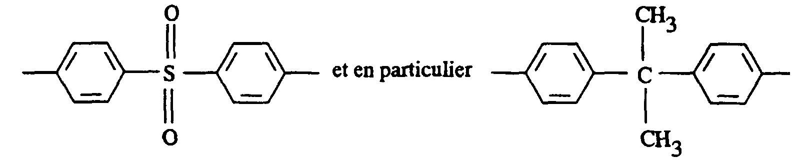 et 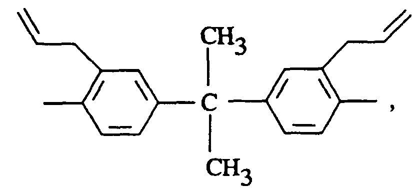 et en ce que m est un nombre entier de 1 à 3.

12. Procédé selon la revendication 1, caractérisé en ce que celles-ci consistent à raison de 95-99,8 % en masse en segments de formule I où R est un élément structural récurrent de formule Ia et à raison de 0,2-5 % en masse en segments de formule IIa où m est égal à 1 ou 2, les indications de masse étant rapportées au polymère total.

13. Procédé selon la revendication 1, caractérisé en ce que la proportion des segments de formule IIa, IIb et/ou IIc est de 0,2-2 % en masse par rapport au polymère total.

14. Solution contenant environ 1 à 75 % en masse, par rapport à la solution, d'une polyarylèneéthersulfone selon la revendication 1 dissoute dans un solvant organique.
